# EUROPEAN PATENT APPLICATION

(11) **EP 4 813 715 A1**
(43) Date of publication of application: **30.09.2026**
(21) Application number: 24903874.6
(22) Date of filing: 01.08.2024
(51) Int. Cl.: B60K 35/22, B60K 35/60, B60K 35/55, B60K 35/81

(54) **REAR SEAT DISPLAY DEVICE FOR VEHICLE AND OPERATION METHOD THEREOF**

(30) Priority: 12.12.2023 KR 20230179219
(71) Applicant: LG Electronics Inc., Yeongdeungpo-gu Seoul 07336 (KR)
(72) Inventor: JEON, Byunglok, Seoul 06772 (KR); KIM, Hansoo, Seoul 06772 (KR); SON, Sanghyeun, Seoul 06772 (KR); SHIM, Inkoo, Seoul 06772 (KR); KIM, Jinhee, Seoul 06772 (KR); KIM, Byungkyu, Seoul 06772 (KR); CHUN, Sewon, Seoul 06772 (KR)
(74) Representative: Vossius & Partner Patentanwälte Rechtsanwälte mbB
(86) International application number: PCT/KR2024/011342
(87) International publication number: WO 2025/127303

(57) **Abstract**

A rear seat display device for a vehicle according to an embodiment of the present invention comprises: a first display and a second display respectively disposed on a plurality of movable frames disposed side by side; a first driving module for driving the first and second displays to move in a first direction and a second driving module for driving the first and second displays to move in a second direction different from the first direction; and a control unit for controlling the driving of the first and second driving modules and screens of the first and second displays. The control unit controls the first driving module so that the first and second displays move together in the first direction in response to a first input signal, and controls the second driving module so that the first and second displays move apart from or toward each other in the second direction in response to a second input signal different from the first input signal.

## Description

### Technical Field

The present disclosure relates to a vehicle rear seat display device, and more particularly, to a vehicle rear seat display device configured to be movable in different directions within a vehicle, and an operation method thereof.

### Background Art

A vehicle is an apparatus that moves in a direction desired by a user who gets on board. A representative example is an automobile.

Meanwhile, for the convenience of the user using the vehicle, there is a trend in which various sensors, electronic apparatuses, and the like are provided. In particular, research on an advanced driver assistance system (ADAS) is being actively carried out for the user's convenience in driving. Furthermore, development of autonomous vehicles is being actively carried out.

In addition, as spending more time in the vehicle, there is a growing trend of users no longer viewing the vehicle merely as a means of transportation, but rather perceiving it as a space. Accordingly, research is being conducted to provide various infotainment environments more realistically by using a large display within the vehicle.

There is a need for all passengers in the vehicle to use the display installed for convenience in a more convenient and selective manner depending on the situation.

### Disclosure of Invention

### Technical Problem

An aspect of the present disclosure is to solve the foregoing and other problems.

According to some embodiments of the present disclosure, an aspect thereof is to provide a vehicle rear seat display device that operates to allow a plurality of screens located in a rear seat of a vehicle to be used as independent screens or multi-screens depending on the needs of a rear seat occupant, and a method of operating the same.

In addition, according to some embodiments of the present disclosure, another aspect thereof is to provide a vehicle rear seat display device that operates to allow a plurality of screens located in a rear seat of a vehicle to be used by an occupant in a front seat when necessary, and a method of operating the same

Moreover, according to some embodiments of the present disclosure, an aspect thereof is to provide a vehicle rear seat display device in which a plurality of screens are implemented to be foldable based on the ceiling of the vehicle when the plurality of screens located in the rear seat of the vehicle are not used or an occupant can view the screen at a comfortable angle, and a method of operating the same.

Besides, according to some embodiments of the present disclosure, an aspect thereof is to provide a vehicle rear seat display device implemented to restrict a movement operation in some directions of a plurality of screens during the driving of a vehicle in consideration of the driving safety of the vehicle, and a method of operating the same.

### Solution to Problem

To this end, a vehicle rear seat display device according to an embodiment of the present disclosure is implemented so as to allow a plurality of screens to move together in different directions based on different input signals.

Specifically, a vehicle rear seat display device according to an embodiment of the present disclosure can include a first display and a second display respectively arranged on a plurality of movable frames arranged side by side; a first drive module that drives the first and second displays to move in a first direction, and a second drive module that drives the first and second displays to move in a second direction different from the first direction; and a control part that controls the driving of the first and second drive modules and screens of the first and second displays. In this case, the control part can control the first drive module such that the first and second displays move together in the first direction in response to a first input signal, and control the second drive module such that the first and second displays move in the second direction so as to get away from or closer to each other in response to a second input signal different from the first input signal.

Additionally, in an embodiment, the vehicle rear seat display device can further include an angle adjustment part that adjusts a degree of folding of the plurality of movable frames so as to allow the first and second displays to form a predetermined angle with respect to the ceiling. Additionally, the control part can adjust the degree of folding of the plurality of movable frames in response to the first input signal so as to allow the first and second displays to form a predetermined angle between vertical and horizontal with respect to the ceiling.

Additionally, in an embodiment, the control part can control the angle adjustment part to be driven at at least one time point before and after the plurality of movable frames move in response to the first input signal.

Additionally, in an embodiment, the control part can control the driving of the angle adjustment part such that the plurality of movable frames are folded before moving the first and second displays in the first direction in response to the first input signal, and the plurality of movable frames are unfolded after moving in the first direction.

Additionally, in an embodiment, the control part can maintain a plurality of screens in an inactive state while the first and second displays move in the first direction in response to the first input signal, and control the driving of the angle adjustment part such that the plurality of movable frames are unfolded in a first angle range based on the completion of movement of the first and second displays to a position corresponding to a front seat.

Additionally, in an embodiment, the control part can generate, when the first and second displays move together in the first direction in response to the first input signal, a control signal for adjusting an angle of a seat located in a front seat of a vehicle and provide it to a vehicle system.

Additionally, in an embodiment, the vehicle rear seat display device can further include a communication part that receives state information of a vehicle. Additionally, the control part can determine whether to move the first and second displays in the first direction in response to the first input signal based on the received state information of the vehicle.

Additionally, in an embodiment, the control part can display a first type of screen while the first and second displays are at a position corresponding to a rear seat of the vehicle, and control the first type of screen to change to a second type of screen related to the driving of the vehicle based on the first and second displays moving to a position corresponding to the front seat of the vehicle according to the driving of the first drive module.

Additionally, in an embodiment, while at least one of the first and second displays is in an active state, the control part can perform screen control so as to allow the first and second displays to operate in a full screen view based on the first and second displays moving in the second direction to get closer to each other in response to the second input signal.

Additionally, in an embodiment, while first screen information is displayed on the first display and second screen information is displayed on the second display, the control part can display one of the first and second screen information in a full screen view on the first and second displays based on a preset condition on the basis of the first and second displays moving in the second direction to get closer to each other in response to the second input signal.

Additionally, in an embodiment, while the first and second displays are operating in a full screen view, the control part can perform screen control so as to allow the first and second displays to operate as independent screens based on the first and second displays moving in the second direction to get away from each other in response to the second input signal.

Additionally, in an embodiment, while only one of the first and second displays is in an active state, the control part can control the other display to be switched to an active state based on the first and second displays moving in the second direction so as to get closer to each other in response to the second input signal, and control the other display to be switched to an inactive state based on the first and second displays moving in the second direction so as to get away from each other in response to a subsequent second input signal.

Additionally, in an embodiment, the vehicle rear seat display device can further include a communication part that receives state information of a vehicle. Additionally, the control part can determine whether to move in the second direction in which the first and second displays get closer to each other in response to the second input signal, based on the received state information of the vehicle.

Additionally, a method of operating a vehicle rear seat display device according to an embodiment of the present disclosure, which is a method of operating a vehicle rear seat display device including a first display and a second display respectively arranged on a plurality of movable frames arranged side by side, can be configured to perform the following operations. The following operations can include displaying screen information on at least one of the first and second displays at a position corresponding to a rear seat of the vehicle; controlling a first drive module so as to allow the first and second displays to move together in a first direction in response to the reception of a first input signal; controlling a second drive module so as to allow the first and second displays to move in a second direction of getting away from or closer to each other, in response to the reception of a second input signal different from the first input signal; and controlling the displayed screen information based on the movement of the first and second displays corresponding to at least one of the first and second input signals.

Additionally, in an embodiment, the controlling of the first drive module can further include adjusting a degree of folding of the plurality of movable frames in response to the first input signal so as to allow the first and second displays to form a predetermined angle between vertical and horizontal with respect to the ceiling.

Additionally, in an embodiment, the controlling of the first drive module can further include generating, when the first and second displays move together in the first direction, a control signal for adjusting a seat angle of a front seat of the vehicle and providing it to a vehicle system.

Additionally, in an embodiment, the controlling of the displayed screen information can include controlling screen information so as to allow the first and second displays to operate in a full screen view based on the first and second displays moving in the second direction to get closer to each other in response to the second input signal.

### Advantageous Effects of Invention

According to a vehicle rear seat display device in accordance with the present disclosure and a method of operating the same, as a plurality of screens located in a rear seat of a vehicle move in a direction of getting closer to or away from each other, a display mode of the screen can be changed, thereby allowing them to be used as independent screens or multi-screens depending on the needs of a rear seat occupant. Accordingly, a user experience utilizing a plurality of screens is further expanded.

In addition, according to a vehicle rear seat display device in accordance with the present disclosure and a method of operating the same, a plurality of screens located in a rear seat of a vehicle can be implemented to be movable toward a front seat or back toward a rear seat, thereby allowing the rear seat screens to also be used by an occupant in the front seat when necessary. Accordingly, a limited number of displays can be shared by more occupants, thereby expanding the user experience and allowing an interior design of a vehicle to be kept simple.

Furthermore, according to some embodiments of the present disclosure, a plurality of screens are automatically changed to a display mode that matches the viewing intention of the vehicle occupant due to movement, and furthermore, the operation of leaning back the seat is performed in parallel, thereby enabling more comfortable viewing of content inside the car. Additionally, in consideration of the driving safety of the vehicle, it is implemented to restrict a movement of the plurality of screens to the front seat during the driving of the vehicle, and to restrict a coupling of multi-screens in the rear seat during manual driving, thereby simultaneously satisfying the needs and driving safety of the occupants.

### Brief Description of Drawings

FIG. 1 is a block diagram referenced to describe a vehicle and a rear seat display device related to an embodiment of the present disclosure.
FIG. 2 is a drawing showing a vehicle rear seat display device installed within a vehicle according to an embodiment of the present disclosure.
FIG. 3 is a block diagram for explaining a detailed configuration of a vehicle rear seat display device according to an embodiment of the present disclosure.
FIG. 4 is a conceptual diagram for explaining a movement operation of a vehicle rear seat display device and a compatibility with a front seat display device according to an embodiment of the present disclosure.
FIGS. 5A, 5B, 5C, and 5D are conceptual views for explaining that a vehicle rear seat display device according to an embodiment of the present disclosure moves in different directions and adjusts its angle.
FIG. 6 is a representative flowchart for explaining a method of operating a vehicle rear seat display device according to an embodiment of the present disclosure.
FIGS. 7A, 7B, and 7C are example drawings for explaining a method of using first and second displays as independent screens according to an embodiment of the present disclosure.
FIGS. 8A, 8B, 8C, and 8D are example drawings for explaining a method of moving first and second displays closer to each other according to an embodiment of the present disclosure and a screen control method thereof.
FIGS. 9A and 9B are example drawings for explaining a method of moving first and second displays to a position corresponding to a front seat of a vehicle, a screen control method thereof, and an operation of a vehicle system.
FIG. 10 is a flowchart for explaining screen control and an operation process of a vehicle system when first and second displays move to a position corresponding to a front seat of a vehicle according to an embodiment of the present disclosure.

### Mode for the Invention

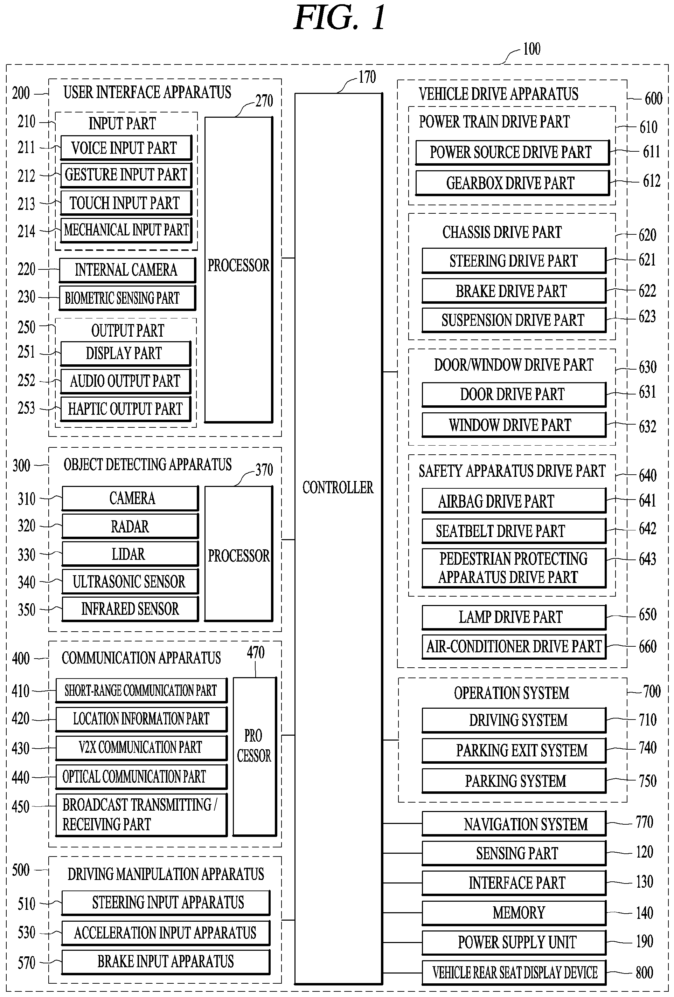

FIG. 1 is a block diagram referenced to describe a vehicle and a rear seat display device related to an embodiment of the present disclosure.

Referring to FIG. 1, a vehicle 100 can include a wheel that rotates by a power source and a steering input apparatus 510 for adjusting a direction of travel of the vehicle 100.

The vehicle 100 can be an autonomous driving vehicle. The vehicle 100 can be switched into an autonomous driving mode or a manual mode based on a user input. For example, the vehicle 100 can be converted from the manual mode into the autonomous driving mode or from the autonomous driving mode into the manual mode based on a user input received through a user interface apparatus (hereinafter, referred to as a 'user terminal') 200.

The vehicle 100 can be switched into the autonomous driving mode or the manual mode based on driving environment information. The driving environment information can be generated based on object information provided from an object detecting apparatus 300. For example, the vehicle 100 can be switched from the manual mode into the autonomous driving mode or from the autonomous driving mode into the manual mode based on driving environment information generated in the object detection apparatus 300. In an example, the vehicle 100 can be switched from the manual mode into the autonomous driving mode or from the autonomous driving mode into the manual mode based on driving environment information received through a communication apparatus 400.

The vehicle 100 can be switched from the manual mode into the autonomous driving mode or from the autonomous driving mode into the manual mode based on information, data or signal provided from an external device.

When the vehicle 100 can be operated in the autonomous driving mode, the autonomous driving vehicle 100 can be operated based on an operation system 700. For example, the autonomous driving vehicle 100 can be driven based on information, data or signal generated in a driving system 710, a parking exit system 740 and a parking system 750.

When the vehicle 100 is driven in the manual mode, the autonomous driving vehicle 100 can receive a user input for driving through a driving manipulation apparatus 500. The vehicle 100 can be driven based on the user input received through the driving manipulation apparatus 500.

An overall length refers to a length from a front end to a rear end of the vehicle 100, a width refers to a width of the vehicle 100, and a height refers to a length from a bottom of a wheel to a roof. In the following description, an overall-length direction L can refer to a direction which is a criterion for measuring the overall length of the vehicle 100, a width direction W can refer to a direction that is a criterion for measuring a width of the vehicle 100, and a height direction H can refer to a direction that is a criterion for measuring a height of the vehicle 100.

As illustrated in FIG. 1, the vehicle 100 can include a user interface apparatus (hereinafter, referred to as a 'user terminal') 200, an object detection apparatus 300, a communication apparatus 400, a driving manipulation apparatus 500, a vehicle drive apparatus 600, an operation system 700, a navigation system 770, a sensing part 120, an interface part 130, a memory 140, a control part 170, and a power supply part 190.

According to embodiments, the vehicle 100 can include more components in addition to components to be explained in this specification or can not include some of those components to be explained in this specification.

The user interface apparatus 200 is an apparatus for communication between the vehicle 100 and a user. The user interface apparatus 200 can receive a user input and provide information generated in the vehicle 100 to the user. The vehicle 100 can implement a user interface (UI) or user experience (UX) through a user interface apparatus (hereinafter, referred to as a 'user terminal') 200.

The user interface apparatus 200 can include an input part 210, an internal camera 220, a biometric detection part 230, an output part 250, and a processor 270. According to embodiments, the user interface apparatus 200 can include more components in addition to components to be explained in this specification or can not include some of those components to be explained in this specification.

The input part 210 can allow the user to input information, and data collected in the input part 210 can be analyzed by the processor 270 and processed as a user's control command.

The input part 210 can be arranged within the vehicle. For example, the input part 210 can be arranged on one area of a steering wheel, one area of an instrument panel, one area of a seat, one area of each pillar, one area of a door, one area of a center console, one area of a headlining, one area of a sun visor, one area of a windshield, one area of a window, or the like.

The input part 210 can include a voice input module 211, a gesture input module 212, a touch input module 213, and a mechanical input module 214.

The audio input part 211 can convert a user's voice input into an electric signal. The converted electric signal can be provided to the processor 270 or the control part 170. The audio input part 211 can include at least one microphone.

The gesture input part 212 can convert a user's gesture input into an electric signal. The converted electric signal can be provided to the processor 270 or the control part 170.

The gesture input part 212 can include at least one of an infrared sensor and an image sensor for detecting the user's gesture input. According to an embodiment, the gesture input part 212 can detect a user's three-dimensional (3D) gesture input. To this end, the gesture input part 212 can include a light output part outputting a plurality of infrared rays or a plurality of image sensors.

The gesture input part 212 can detect the user's 3D gesture input by a time of flight (TOF) method, a structured light method or a disparity method.

The touch input part 213 can convert the user's touch input into an electric signal. The converted electric signal can be provided to the processor 270 or the control part 170.

The touch input part 213 can include a touch sensor for detecting the user's touch input. According to an embodiment, the touch input part 213 can be integrated with the display part 251 so as to implement a touch screen. The touch screen can provide an input interface and an output interface between the vehicle 100 and the user.

The mechanical input part 214 can include at least one of a button, a dome switch, a jog wheel, and a jog switch. An electric signal generated by the mechanical input part 214 can be provided to the processor 270 or the control part 170. The mechanical input part 214 can be arranged on a steering wheel, a center fascia, a center console, a cockpit module, a door and the like.

The internal camera 220 can acquire an internal image of the vehicle. The processor 270 can detect a user's state based on the internal image of the vehicle. The processor 270 can acquire information related to the user's gaze from the internal image of the vehicle. The processor 270 can detect a user gesture from the internal image of the vehicle.

The biometric detection part 230 can acquire the user's biometric information. The biometric detection part 230 can include a sensor for detecting the user's biometric information and acquire fingerprint information and heart rate information regarding the user using the sensor. The biometric information can be used for user authentication.

The output part 250 can generate an output related to a visual, auditory or tactile signal. The output part 250 can include at least one of a display part 251, a sound output part 252 and a haptic output part 253.

The display part 251 can output graphic objects corresponding to various types of information. The display part 251 can include at least one of a liquid crystal display (LCD), a thin film transistor-LCD (TFT LCD), an organic light-emitting diode (OLED), a flexible display, a three-dimensional (3D) display and an e-ink display.

The display part 251 can be inter-layered or integrated with a touch input part 213 to implement a touch screen.

The display part 251 can be implemented as a head-up display (HUD). When the display part 251 is implemented as the HUD, the display part 251 can be provided with a projecting module so as to output information through an image which is projected on a windshield or a window.

The display part 251 can include a transparent display. The transparent display can be attached to the windshield or the window. The transparent display can display a predetermined screen with a predetermined transparency. In order to achieve transparency, the transparent display can include at least one of a transparent Thin Film Electroluminescent (TFEL) display, an Organic Light Emitting Diode (OLED) display, a transparent Liquid Crystal Display (LCD), a transmissive transparent display, and a transparent Light Emitting Diode (LED) display. The transparency of the transparent display can be adjustable.

Meanwhile, the user interface apparatus 200 can include a plurality of display parts 251a to 251g.

The display part 251 can be arranged on one area of a steering wheel, one area 521a, 251b, 251e of an instrument panel, one area 251d of a seat, one area 251f of each pillar, one area 251g of a door, one area of a center console, one area of a headlining or one area of a sun visor, or implemented on one area 251c of a windshield or one area 251h of a window.

The sound output part 252 can convert an electric signal provided from the processor 270 or the control part 170 into an audio signal for output. To this end, the sound output part 252 can include at least one speaker.

The haptic output part 253 generates a tactile output. For example, the haptic output part 253 can vibrate a steering wheel, a safety belt, a seat 110FL, 110FR, 110RL, 110RR to allow the user to recognize such an output.

The processor (hereinafter, referred to as a 'control part') 270 can control an overall operation of each unit of the user interface apparatus 200. According to an embodiment, the user interface apparatus 200 can include a plurality of processors 270 or can not include any processor 270.

When the processor 270 is not included in the user interface apparatus 200, the user interface apparatus 200 can operate according to a control of a processor of another apparatus within the vehicle 100 or the control part 170.

Meanwhile, the user interface apparatus 200 can be called as a vehicle display device. The user interface apparatus 200 can operate according to the control of the control part 170.

The object detection apparatus 300 is an apparatus for detecting an object located at outside of the vehicle 100. The object can be a variety of objects associated with driving (operation) of the vehicle 100. The object can include an lanes, another vehicle, a pedestrian, a two-wheeled vehicle, a traffic signal, light, a road, a structure, a speed bump, a terrain feature, an animal, and the like

The road can include a road surface, a curve, an upward slope, a downward slope and the like.

The structure can be an object that is located near a road and fixed on the ground. For example, the structure can include a streetlamp, a roadside tree, a building, an electric pole, a traffic light, a bridge and the like.

The terrain feature can include a mountain, a hill and the like.

Meanwhile, objects can be classified into a moving object and a fixed object. For example, the moving object can be a concept including another vehicle and a pedestrian. The fixed object can be a concept including a traffic signal, a road and a structure.

The object detection apparatus 300 can include a camera 310, a radar 320, a lidar 330, an ultrasonic sensor 340, an infrared sensor 350 and a processor 370.

According to an embodiment, the object detection apparatus 300 can further include other components in addition to the components described, or can not include some of the components described.

The camera 310 can be located on an appropriate portion outside the vehicle to acquire an external image of the vehicle. The camera 310 can be a mono camera, a stereo camera 310a, an AVM (Around View Monitoring) camera 310b, or a 360-degree camera.

For example, the camera 310 can be arranged in the interior of the vehicle, in close proximity to a front windshield, to acquire an image on the front of the vehicle. Or, the camera 310 can be arranged adjacent to a front bumper or a radiator grill.

For example, the camera 310 can be arranged in the interior of the vehicle, in close proximity to a rear glass, to acquire an image on the rear of the vehicle. Or, the camera 310 can be arranged adjacent to a rear bumper, a trunk or a tail gate.

For example, the camera 310 can be arranged in close proximity to at least one of side windows in the interior of the vehicle to acquire an image on the side of the vehicle. Or, the camera 310 can be arranged adjacent to a side mirror, a fender or a door.

The camera 310 can provide an acquired image to the processor 370.

The radar 320 can include electric wave transmitting and receiving portions. The radar 320 can be implemented as a pulse radar or a continuous wave radar according to a principle of emitting electric waves. The radar 320 can be implemented in a frequency modulated continuous wave (FMCW) manner or a frequency shift keying (FSK) manner according to a signal waveform, among the continuous wave radar methods.

The radar 320 can detect an object in a time of flight (TOF) manner or a phase-shift manner through the medium of electromagnetic waves, and detect a position of the detected object, a distance from the detected object and a relative speed with the detected object.

The radar 320 can be arranged on an appropriate position outside the vehicle for detecting an object which is located on the front, rear or side of the vehicle.

The lidar 330 can include laser transmitting and receiving portions. The lidar 330 can be implemented in a time of flight (TOF) manner or a phase-shift manner.

The lidar 330 can be implemented as a drive type or a non-drive type.

For the drive type, the lidar 330 can be rotated by a motor and detect object near the vehicle 100.

For the non-drive type, the lidar 330 can detect, through light steering, objects which are located within a predetermined range based on the vehicle 100. The vehicle 100 can include a plurality of non-drive type lidars 330.

The lidar 330 can detect an object in a time of flight (TOF) manner or a phase-shift manner through the medium of laser light, and detect a position of the detected object, a distance from the detected object and a relative speed with the detected object.

The lidar 330 can be arranged on an appropriate position outside the vehicle for detecting an object located on the front, rear or side of the vehicle.

The ultrasonic sensor 340 can include ultrasonic wave transmitting and receiving portions. The ultrasonic sensor 340 can detect an object based on an ultrasonic wave, and detect a position of the detected object, a distance from the detected object and a relative speed with the detected object.

The ultrasonic sensor 340 can be arranged on an appropriate position outside the vehicle for detecting an object located on the front, rear or side of the vehicle.

The infrared sensor 350 can include infrared light transmitting and receiving portions. The infrared sensor 340 can detect an object based on infrared light, and detect a position of the detected object, a distance from the detected object and a relative speed with the detected object.

The infrared sensor 350 can be arranged on an appropriate position outside the vehicle for detecting an object located on the front, rear or side of the vehicle.

The processor 370 can control an overall operation of each unit of the object detection apparatus 300.

The processor 370 can detect an object based on an acquired image, and track the object. The processor 370 can execute operations, such as a calculation of a distance from the object, a calculation of a relative speed with the object and the like, through an image processing algorithm.

The processor 370 can detect an object based on a reflected electromagnetic wave which an emitted electromagnetic wave is reflected from the object, and track the object. The processor 370 can execute operations, such as a calculation of a distance from the object, a calculation of a relative speed with the object and the like, based on the electromagnetic wave.

The processor 370 can detect an object based on a reflected laser beam which an emitted laser beam is reflected from the object, and track the object. The processor 370 can execute operations, such as a calculation of a distance from the object, a calculation of a relative speed with the object and the like, based on the laser beam.

The processor 370 can detect an object based on a reflected ultrasonic wave which an emitted ultrasonic wave is reflected from the object, and track the object. The processor 370 can execute operations, such as a calculation of a distance from the object, a calculation of a relative speed with the object and the like, based on the ultrasonic wave.

The processor 370 can detect an object based on reflected infrared light which emitted infrared light is reflected from the object, and track the object. The processor 370 can execute operations, such as a calculation of a distance from the object, a calculation of a relative speed with the object and the like, based on the infrared light.

According to an embodiment, the object detection apparatus 300 can include a plurality of processors 370 or can not include any processor 370. For example, each of the camera 310, the radar 320, the lidar 330, the ultrasonic sensor 340 and the infrared sensor 350 can include the processor in an individual manner.

When the processor 370 is not included in the object detection apparatus 300, the object detection apparatus 300 can operate according to the control of a processor of an apparatus within the vehicle 100 or the control part 170.

The object detection apparatus 400 can operate according to the control of the control part 170.

The communication apparatus 400 is an apparatus for performing communication with an external device. Here, the external device can be another vehicle, a mobile terminal or a server.

The communication apparatus 400 can perform the communication by including at least one of a transmitting antenna, a receiving antenna, and radio frequency (RF) circuit and RF device for implementing various communication protocols.

The communication apparatus 400 can include a short-range communication part 410, a location information part 420, a V2X communication part 430, an optical communication part 440, a broadcast transmitting/receiving part 450 and a processor 470.

According to an embodiment, the communication apparatus 400 can further include other components in addition to the components described, or can not include some of the components described.

The short-range communication part 410 is a unit for facilitating short-range communications. The short-range communication part 410 can support short-range communication using at least one of Bluetooth^{™}, Radio Frequency Identification (RFID), Infrared Data Association (IrDA), Ultra Wideband (UWB), ZigBee, Near field communication (NFC), Wireless-Fidelity (Wi-Fi), Wi-Fi Direct, Wireless Universal Serial Bus (Wireless USB), and the like.

The short-range communication part 410 can construct short-range area networks to perform short-range communication between the vehicle 100 and at least one external device.

The location information part 420 is a unit for acquiring position information. For example, the location information part 420 can include a Global Positioning System (GPS) module or a Differential Global Positioning System (DGPS) module.

The V2X communication part 430 is a unit for performing wireless communications with a server (vehicle to infrastructure; V2I), another vehicle (vehicle to vehicle; V2V), or a pedestrian (vehicle to pedestrian; V2P). The V2X communication part 430 can include an RF circuit capable of implementing a communication protocol with an infrastructure (V2I), a communication protocol between vehicles (V2V) and a communication protocol with a pedestrian (V2P).

The optical communication part 440 is a unit for performing communication with an external device through the medium of light. The optical communication part 440 can include a light-emitting diode for converting an electric signal into an optical signal and sending the optical signal to the exterior, and a photodiode for converting the received optical signal into an electric signal.

According to an embodiment, the optical transmission part can be formed integrally with lamps provided on the vehicle 100.

The broadcast transmitting/receiving part 450 is a unit for receiving a broadcast signal from an external broadcast managing entity or transmitting a broadcast signal to the broadcast managing entity via a broadcast channel. The broadcast channel can include a satellite channel, a terrestrial channel, or both. The broadcast signal can include a TV broadcast signal, a radio broadcast signal and a data broadcast signal.

The processor 470 can control an overall operation of each unit of the communication apparatus 400.

According to an embodiment, the communication apparatus 400 can include a plurality of processors 470 or can not include any processor 470.

When the processor 470 is not included in the communication apparatus 400, the communication apparatus 400 can operate according to the control of a processor of another apparatus within the vehicle 100 or the control part 170.

Meanwhile, the communication apparatus 400 can implement a vehicle display device together with the user interface apparatus 200. In this instance, the display device for the vehicle can be referred to as a telematics device or an Audio Video Navigation (AVN) device.

The communication apparatus 400 can operate according to the control of the control part 170.

The driving manipulation apparatus 500 is an apparatus for receiving a user input for driving.

In a manual mode, the vehicle 100 can be operated based on a signal provided by the driving manipulation apparatus 500.

The driving manipulation apparatus 500 can include a steering input apparatus 510, an acceleration input apparatus 530 and a brake input apparatus 570.

The steering input apparatus 510 can receive an input regarding a driving (ongoing) direction of the vehicle 100 from the user. The steering input apparatus 510 is preferably configured in the form of a wheel allowing a steering input in a rotating manner. According to an embodiment, the steering input apparatus can also be configured in a shape of a touch screen, a touchpad, or a button.

The acceleration input apparatus 530 can receive an input for accelerating the vehicle 100 from the user. The brake input apparatus 570 can receive an input for braking the vehicle 100 from the user. Each of the acceleration input apparatus 530 and the brake input apparatus 570 is preferably configured in the form of a pedal. According to an embodiment, the acceleration input apparatus or the brake input apparatus can also be configured in the form of a touch screen, a touch pad or a button.

The driving manipulation apparatus 500 can operate according to the control of the control part 170.

The vehicle drive apparatus 600 is an apparatus for electrically controlling the driving of various apparatuses within the vehicle 100.

The vehicle drive apparatus 600 can include a power train drive part 610, a chassis drive part 620, a door/window drive part 630, a safety apparatus drive part 640, a lamp drive part 650, and an air-conditioner drive part 660.

According to an embodiment, the vehicle drive apparatus 600 can further include other components in addition to the components described, or can not include some of the components described.

Meanwhile, the vehicle drive apparatus 600 can include a processor. Each unit of the vehicle drive apparatus 600 can individually include a processor.

The power train drive part 610 can control an operation of a power train apparatus.

The power train drive part 610 can include a power source drive part 611 and a gearbox drive part 612.

The power source drive part 611 can perform a control for a power source of the vehicle 100.

For example, upon using a fossil fuel-based engine as the power source, the power source drive part 611 can perform an electronic control for the engine. Accordingly, an output torque and the like of the engine can be controlled. The power source drive part 611 can adjust the engine output torque according to the control of the control part 170.

For example, upon using an electric energy-based motor as the power source, the power source drive part 611 can perform a control for the motor. The power source drive part 611 can adjust a rotating speed, a torque and the like of the motor according to the control of the control part 170.

The gearbox drive part 612 can perform a control for a gearbox. The gearbox drive part 612 can adjust a state of the gearbox. The gearbox drive part 612 can change the state of the gearbox into drive (forward) (D), reverse (R), neutral (N) or parking (P).

Meanwhile, when an engine is the power source, the gearbox drive part 612 can adjust a locked state of a gear in the drive (D) state.

The chassis drive part 620 can control an operation of a chassis apparatus. The chassis drive part 620 can include a steering drive part 621, a brake drive part 622 and a suspension drive part 623.

The steering drive part 621 can perform an electronic control for a steering apparatus within the vehicle 100. The steering drive part 621 can change a driving direction of the vehicle.

The brake drive part 622 can perform an electronic control for a brake apparatus within the vehicle 100. For example, the brake drive part 622 can control an operation of brakes provided at wheels to reduce speed of the vehicle 100.

Meanwhile, the brake drive part 622 can individually control each of a plurality of brakes. The brake drive part 622 can differently control braking force applied to each of a plurality of wheels.

The suspension drive part 623 can perform an electronic control for a suspension apparatus within the vehicle 100. For example, the suspension drive part 623 can control the suspension apparatus to reduce vibration of the vehicle 100 when a bump is present on a road. Meanwhile, the suspension drive part 623 can individually control each of a plurality of suspensions.

The door/window drive part 630 can perform an electronic control for a door apparatus or a window apparatus within the vehicle 100.

The door/window drive part 630 can include a door drive part 631 and a window drive part 632.

The door drive part 631 can perform the control for the door apparatus. The door drive part 631 can control opening or closing of a plurality of doors of the vehicle 100. The door drive part 631 can control opening or closing of a trunk or a tail gate. The door drive part 631 can control opening or closing of a sunroof.

The window drive part 632 can perform the electronic control for the window apparatus. The window drive part 632 can control opening or closing of a plurality of windows of the vehicle 100.

The safety apparatus drive part 640 can perform an electronic control for various safety apparatuses within the vehicle 100.

The safety apparatus drive part 640 can include an airbag drive part 641, a seatbelt drive part 642 and a pedestrian protecting apparatus drive part 643.

The airbag drive part 641 can perform an electronic control for an airbag apparatus within the vehicle 100. For example, the airbag drive part 641 can control the airbag to be deployed upon a detection of a risk.

The seatbelt drive part 642 can perform an electronic control for a seatbelt apparatus within the vehicle 100. For example, the seatbelt drive part 642 can control passengers to be motionlessly seated in seats 110FL, 110FR, 110RL, 110RR using seatbelts upon a detection of a risk.

The pedestrian protecting apparatus drive part 643 can perform an electronic control for a hood lift and a pedestrian airbag. For example, the pedestrian protecting apparatus drive part 643 can control the hood lift and the pedestrian airbag to be open up upon detecting pedestrian collision.

The lamp drive part 650 can perform an electronic control for various lamp apparatuses within the vehicle 100.

The air-conditioner drive part 660 can perform an electronic control for an air conditioner within the vehicle 100. For example, the air-conditioner drive part 660 can control the air conditioner to supply cold air into the vehicle when internal temperature of the vehicle is high.

The vehicle drive apparatus 600 can include a processor. Each unit of the vehicle drive apparatus 600 can individually include a processor.

The vehicle drive apparatus 600 can operate according to the control of the control part 170.

The operation system 700 is a system that controls various driving modes of the vehicle 100. The operation system 700 can be operated in the autonomous driving mode.

The operation system 700 can include a driving system 710, a parking exit system 740 and a parking system 750.

According to an embodiment, the operation system 700 can further include other components in addition to the components described, or can not include some of the components described.

Meanwhile, the operation system 700 can include a processor. Each unit of the operation system 700 can individually include a processor.

According to an embodiment, the operation system 700 can be a sub concept of the control part 170 when it is implemented in a software configuration.

Meanwhile, according to an embodiment, the operation system 700 can be a concept including at least one of the user interface apparatus 200, the object detection apparatus 300, the communication apparatus 400, the vehicle drive apparatus 600, and the control part 170.

The driving system 710 can perform driving of the vehicle 100.

The driving system 710 can receive navigation information from a navigation system 770, transmit a control signal to the vehicle drive apparatus 600, and perform driving of the vehicle 100. The driving system 710 can receive object information from the object detection apparatus 300, transmit a control signal to the vehicle drive apparatus 600 and perform driving of the vehicle 100. The driving system 710 can receive a signal from an external device through the communication apparatus 400, transmit a control signal to the vehicle drive apparatus 600, and perform the driving of the vehicle 100.

The parking exit system 740 can perform an exit of the vehicle 100 from a parking lot.

The parking exit system 740 can receive navigation information from the navigation system 770, transmit a control signal to the vehicle drive apparatus 600, and perform the exit of the vehicle 100 from the parking lot. The parking exit system 740 can receive object information from the object detection apparatus 300, transmit a control signal to the vehicle drive apparatus 600 and perform the exit of the vehicle 100 from the parking lot. The parking exit system 740 can receive a signal from an external device through the communication apparatus 400, transmit a control signal to the vehicle drive apparatus 600, and perform the exit of the vehicle 100 from the parking lot.

The parking system 750 can perform parking of the vehicle 100.

The parking system 750 can receive navigation information from the navigation system 770, transmit a control signal to the vehicle drive apparatus 600, and park the vehicle 100. The parking system 750 can receive object information from the object detection apparatus 300, transmit a control signal to the vehicle drive apparatus 600 and park the vehicle 100. The parking system 750 can receive a signal from an external device through the communication apparatus 400, transmit a control signal to the vehicle drive apparatus 600, and park the vehicle 100.

The navigation system 770 can provide navigation information. The navigation information can include at least one of map information, information regarding a set destination, path information according to the set destination, information regarding various objects on a path, lane information and current location information of the vehicle.

The navigation system 770 can include a memory and a processor. The memory can store the navigation information. The processor can control an operation of the navigation system 770.

According to an embodiment, the navigation system 770 can update previously stored information by receiving information from an external apparatus through the communication apparatus 400.

According to an embodiment, the navigation system 770 can be classified as a sub component of the user interface apparatus 200.

The sensing part 120 can sense a status of the vehicle. The sensing part 120 can include a posture sensor (e.g., a yaw sensor, a roll sensor, a pitch sensor, etc.), a collision sensor, a wheel sensor, a speed sensor, a tilt sensor, a weight-detecting sensor, a heading sensor, a gyro sensor, a position module, a vehicle forward/backward movement sensor, a battery sensor, a fuel sensor, a tire sensor, a steering sensor by a turn of a handle, a vehicle internal temperature sensor, a vehicle internal humidity sensor, an ultrasonic sensor, an illumination sensor, an accelerator position sensor, a brake pedal position sensor, and the like.

The sensing part 120 can acquire sensing signals with respect to vehicle-related information, such as a pose, a collision, an orientation, a position (GPS information), an angle, a speed, an acceleration, a tilt, a forward/backward movement, a battery, a fuel, tires, lamps, internal temperature, internal humidity, a rotated angle of a steering wheel, external illumination, pressure applied to an accelerator, pressure applied to a brake pedal and the like.

The sensing part 120 can further include an accelerator sensor, a pressure sensor, an engine speed sensor, an air flow sensor (AFS), an air temperature sensor (ATS), a water temperature sensor (WTS), a throttle position sensor (TPS), a TDC sensor, a crank angle sensor (CAS), and the like.

The vehicle interface part 130 can serve as a path allowing the vehicle 100 to interface with various types of external devices connected thereto. For example, the vehicle interface part 130 can be provided with a port connectable with a mobile terminal, and connected to the mobile terminal through the port. In this instance, the interface part 130 can exchange data with the mobile terminal.

Meanwhile, the vehicle interface part 130 can serve as a path for supplying electric energy to the connected mobile terminal. When the mobile terminal is electrically connected to the vehicle interface part 130, the vehicle interface part 130 supplies electric energy supplied from a power supply part 190 to the mobile terminal according to the control of the control part 170.

The memory 140 is electrically connected to the control part 170. The memory 140 can store basic data for units, control data for controlling operations of units and input/output data. The memory 140 can be various storage apparatuses such as a ROM, a RAM, an EPROM, a flash drive, a hard drive, and the like in terms of hardware. The memory 140 can store various data for overall operations of the vehicle 100, such as programs for processing or controlling the control part 170.

According to an embodiment, the memory 140 can be integrated with the control part 170 or implemented as a sub component of the control part 170.

The control part 170 can control an overall operation of each unit of the vehicle 100. The control part 170 can be referred to as an Electronic Control Unit (ECU).

The power supply part 190 can supply power for an operation of each component according to the control of the control part 170. Specifically, the power supply part 190 can receive power supplied from an internal battery of the vehicle, and the like.

At least one processor and the control part 170 included in the vehicle 100 can be implemented using at least one of application specific integrated circuits (ASICs), digital signal processors (DSPs), digital signal processing devices (DSPDs), programmable logic devices (PLDs), field programmable gate arrays (FPGAs), processors, control parts, micro control parts, microprocessors, and electric units performing other functions.

Meanwhile, in embodiments of the present disclosure, a 'driver', 'occupant', 'driver or occupant (driver/occupant)' refers to a driver, passenger, co-passenger, occupant, or the like who is on board a vehicle capable of autonomous driving according to an embodiment of the present disclosure, and can be one or more.

Additionally, in embodiments of the present disclosure, the term 'vehicle' is used to refer to a vehicle capable of performing autonomous driving by artificial intelligence (AI) or a vehicle capable of receiving such services. In addition, in embodiments of the present disclosure, the 'vehicle' can be freely switched between manual driving, fully autonomous driving, and semi-autonomous driving by a driver.

In embodiments of the present disclosure, a 'vehicle rear seat display device', which is a display device arranged in a rear seat of the vehicle 100, can be formed to be movable in different directions. The vehicle rear seat display device can include a plurality of drive modules for moving in different directions. Additionally, the vehicle rear seat display device can be formed to be tiltable at a predetermined angle with respect to a ceiling of the vehicle.

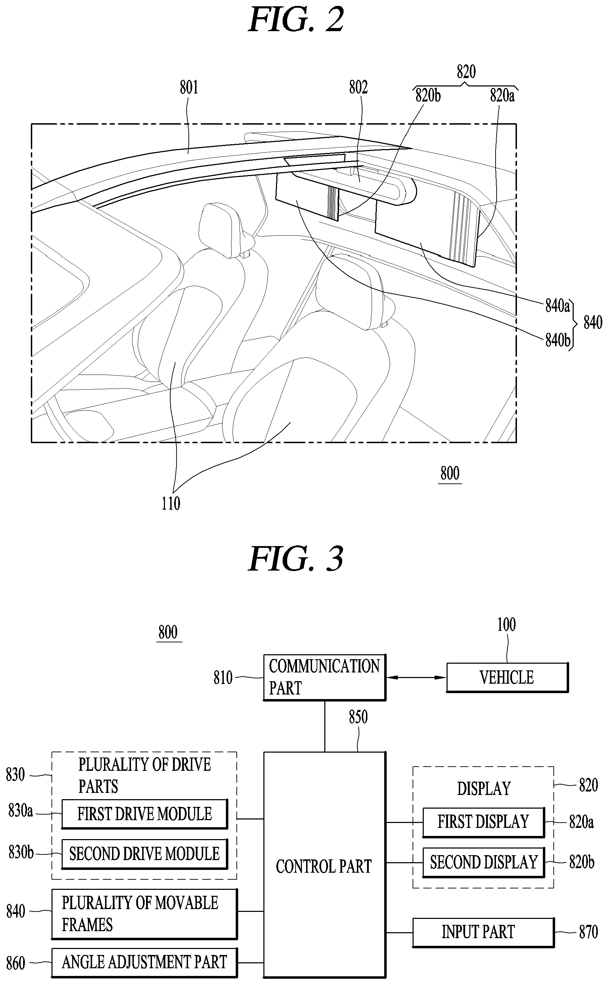

FIG. 2 is a drawing showing a vehicle rear seat display device 800 according to an embodiment of the present disclosure installed in the vehicle 100.

As shown in FIG. 2, the vehicle rear seat display device 800 can be formed such that a plurality of movable frames 840a, 840b connected to a fixed frame 801 installed on a ceiling from a front seat 110 toward a rear seat in the vehicle 100, and first and second display 820a, 820b are respectively arranged on front surfaces of the plurality of movable frames 840a, 840b.

Meanwhile, an angle adjustment part 860 can be mounted on a rear surface of the plurality of movable frames 840 to adjust an angle of the first and second displays 820a, 820b. Depending on the operation of the angle adjustment part 860, the first and second displays 820a, 820b can form a horizontal or vertical line with the fixed frame 801 as shown.

The plurality of movable frames 840 are formed to be movable in different directions. Accordingly, the first and second displays 820a, 820b arranged on front surfaces of the plurality of movable frames 840, respectively, can move in different directions.

Specifically, the plurality of movable frames 840 can move along a length direction of the fixed frame 801 installed on the ceiling to the front of the front seat or to the rear of the front seat (or the front of the rear seat). Accordingly, the first and second displays 820a, 820b are moved to the front of the front seat or to the front of the rear seat of the vehicle 100.

Additionally, the plurality of movable frames 840 can move closer to or away from each other. Accordingly, a spacing between the first and second displays 820a, 820b is adjusted so as to get closer to each other (or come into contact with each other) or away from each other.

As the plurality of movable frames 840 move toward the front of the front seat, when the first and second displays 820a, 820b are located in the front of the front seat of the vehicle 100, an occupant in the front seat (a driver and/or an occupant in the passenger seat) can receive a content service through the first and second displays 820a, 820b.

Meanwhile, when the plurality of movable frames 840 are located in the rear of the front seat as shown in FIG. 2, an occupant in the rear seat of the vehicle 100 can receive a content service through the first and second displays 820a, 820b.

Additionally, when the first and second displays 820a, 820b are spaced apart from each other, the occupant in the rear seat of the vehicle 100 can receive a content service through the first and second displays 820a, 820b as independent screens. That is, an occupant in a left rear seat can receive a content service through the first display 820a, and an occupant in a right rear seat can receive another content service through the second display 820b.

Meanwhile, when a spacing between the first and second displays 820a, 820b is adjusted to be closer, the entire first and second displays 820a, 820b can operate as a full screen. That is, when the first and second displays 820a, 820b come close to each other to come into contact, they can be switched to a full screen without additional screen control.

In another embodiment, when it is determined that there is no intention to use the first and second displays 820a, 820b, folding can be performed so as to allow the plurality of movable frames 840 to form a horizontal line with respect to the fixed frame 801 according to the operation of the angle adjustment part 860.

A state in which the plurality of movable frames 840 shown in FIG. 2 form a vertical line with the fixed frame 801 is defined as an "unfolding state." Additionally, although not shown, a state in which the plurality of movable frames 840 form a horizontal line with the fixed frame 801 is defined as a "folding state."

Referring to FIG. 2, a portion connected to the fixed frame 801 in the plurality of movable frames 840 remains fixed, and the plurality of movable frames 840 can be switched from an "unfolding state" to a "folding state" by rotating significantly toward the fixed frame 801 in a bent manner until they form a horizontal line with the fixed frame 801.

In this way, the vehicle rear seat display device 800 according to an embodiment of the present disclosure can be movable between the front and rear seats, and the plurality of displays can be movable to get closer to or away from each other, thereby allowing all occupants in the vehicle 100 to receive a content service through the rear seat display device 800.

FIG. 3 is a block diagram for explaining a detailed configuration of the vehicle rear seat display device 800 according to an embodiment of the present disclosure.

The vehicle rear seat display device 800 can include a communication part 810, first and second displays 820a, 820b, first and second drive modules 830a, 830b, a plurality of movable frames 840, a control part 850, an angle adjustment part 860, and an input part 870. Additionally, the vehicle rear seat display device 800 can be connected to communicate with a system within the vehicle 100 through the communication part 810.

The communication part 810 can receive vehicle data and vehicle driving data by communicating with the vehicle 100, the system within the vehicle 100, various sensors within the vehicle 100, and various devices such as advanced driver assistance systems (ADAS) and a driver monitoring system (DMS).

Additionally, the communication part 810 can receive an input signal corresponding to an input applied to an input device installed in the vehicle 100 and transmit it to the control part 850. For example, the communication part 810 can receive a signal related to the driving of at least one of the first and second drive modules 830a, 830b of the rear seat display device 800 from an input device in conjunction therewith within the vehicle 100.

A display of the rear seat vehicle display device 800 is configured to include first and second displays 820a, 820b, each having a separate frame. The first and second displays 820a, 820b can respectively display different screens, display the same screen, or display a single connected screen.

The first and second displays 820a, 820b can be arranged on respective front surfaces of the plurality of movable frames 840 arranged side by side. In other words, rear surfaces of the first and second displays 820a, 820b can be arranged to be coupled to movable frames formed to be movable, respectively. Accordingly, as the plurality of movable frames 840 move, the coupled first and second displays 820a, 820b can also move together.

When the first and second displays 820a, 820b are used as independent screens, each screen can be controlled independently. Additionally, when the first and second displays 820a, 820b are used as a full screen, single integrated screen control can be performed.

In an embodiment, screen control of the first and second displays 820a, 820b can be performed based on a movement according to the driving of the first and second drive modules 830a, 830b. For example, when the first and second displays 820a, 820b move toward the front seat or the rear seat according to the driving of the first drive module 830a, the type of content displayed can vary. Additionally, for example, when the first and second displays 820a, 820b move closer to or away from each other depending on the driving of the second drive module 830b, a screen mode (e.g., full screen mode) of the displays can vary.

The first and second drive modules 830a, 830b provide driving forces to move the plurality of movable frames 840 so as to allow the first and second displays 820a, 820b to move in a first direction or in a second direction. Specifically, the first drive module 830a can transmit a driving force to the plurality of movable frames 840 so as to allow the first and second displays 820a, 820b to move in a first direction, that is, together toward the front seat or toward the rear seat. Additionally, the second drive module 830b can provide a driving force to the plurality of movable frames 840 so as to allow the first and second displays 820a, 820b to move in a second direction, that is, a direction of getting closer to or away from each other.

The first and second displays 820a, 820b are respectively arranged on front surfaces of the plurality of movable frames 840. One side of the plurality of movable frames 840 is connected in contact with one side of the fixed frame 801 (FIG. 2) that connects the front and rear seats of the vehicle ceiling. Accordingly, when the first drive module 830a is driven, the plurality of movable frames 840 can be operated to move along a length direction of the fixed frame 801.

The plurality of movable frames 840 can be arranged side by side with a predetermined spacing and formed to be supported by the same support frame located on rear surfaces thereof. Accordingly, when the second drive module 830b is driven, the plurality of movable frames 840 can move closer to each other while being supported by the same support frame, or move again to have a predetermined spacing.

The control part 850 controls an overall operation of the vehicle rear seat display device 800. The control part 850 can be named a processor or PC, and can be arranged, for example, within a housing located between the front seats inside the vehicle 100.

The control part 850 can control the driving of the first and second drive modules 830a, 830b and the screens of the first and second displays 820a, 820b. In an embodiment, the control part 850 can control the first drive module 830a to move the first and second displays 820a, 820b together in a first direction in response to a first input signal. Additionally, the control part 850 can control the second drive module 830b in response to a second input signal different from the first input signal such that the first and second displays 820a, 820b move in a second direction different from the first direction to get away from or closer to each other.

The angle adjustment part 860 can be located between a fixed frame located on rear surfaces of the plurality of movable frames 840 and a fixed frame 801 (FIG. 2) formed on the ceiling of the vehicle.

The angle adjustment part 860 is coupled to one side of the plurality of movable frames 840 so as to allow the plurality of movable frames 840 to operate to form a predetermined angle with respect to the fixed frame 801. Specifically, the angle adjustment part 860 provides a driving force for the plurality of movable frames 840 to rotate such that the plurality of movable frames 840 form a horizontal or vertical line with the fixed frame 801, or form a set angle between horizontal and vertical.

The input part 870 can be arranged on one side within the vehicle 100 so as to be spaced apart from the first and second displays 820a, 820b. The input part 870 can be configured to include a plurality of buttons corresponding to respective directions or to include a manipulation unit capable of tilting/moving in a plurality of directions to control a movement direction of the first and second displays 820a, 820b.

In an embodiment, when a first input signal is generated based on a first input to the input part 870, the control part 850 can drive the first drive module 830a to control the first and second displays 820a, 820b to move together in a first direction. Additionally, when a second input signal is generated based on a second input to the input part 870, the control part 850 can drive the second drive module 830b to control the first and second displays 820a, 820b to move in a second direction of getting closer to or away from each other.

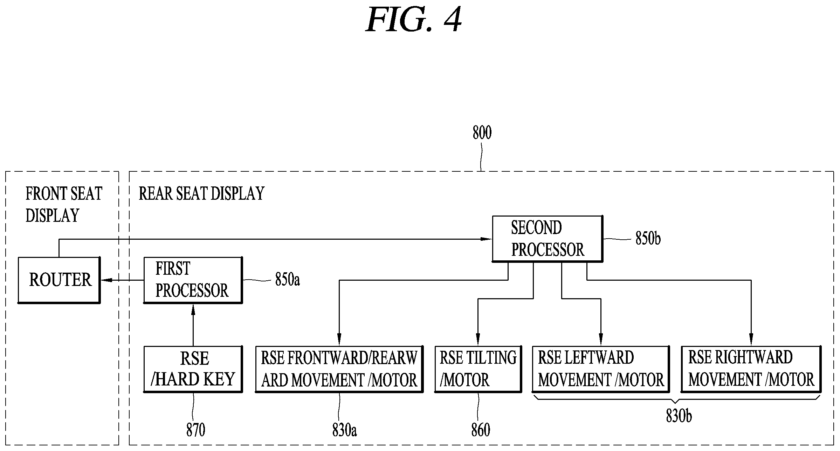

FIG. 4 is a conceptual diagram for explaining a movement operation of the vehicle rear seat display device 800 and a compatibility with a front seat display device according to an embodiment of the present disclosure.

The vehicle rear seat display device 800 can be used by an occupant in the rear seat, or can be operated to move toward the front seat so as to allow an occupant in the front seat to use it.

To this end, the vehicle rear seat display device 800 can communicate with another display device located in the front seat via a router. Additionally, the vehicle rear seat display device 800 can determine whether to move the vehicle rear seat display device 800 based on a result of communication with another display device.

Specifically, when an input is received at the input part 870 of the rear seat display device 800, for example, a hard key or a touch screen, a first processor 850a can transmit a signal corresponding to the received input to a second processor 850b through a router. In this case, the first processor 850a can be, for example, an NVIDIA SYSTEM, and the second processor 850b can be, for example, a mini PC.

As another example, the first processor 850a can directly transmit a drive signal for forward/backward movement of the first and second displays 820a, 820b corresponding to the received input to the first drive module 830a. Accordingly, a motor of the first drive module 830a is driven to generate a driving force so as to move the first and second displays 820a, 820b in a forward/backward direction.

Meanwhile, the functions of the first and second processors 850a, 850b shown in FIG. 4 can be swapped with each other, divided to perform some operations, or performed by a single processor 850.

In addition, the same request input as an input to the input part 870 can be made through a display of the front seat or a manipulation unit of the front seat of the vehicle 100. In this case, similar to the foregoing description, a signal corresponding to the input is transmitted to a processor of the vehicle rear seat display device 800 through a router, thereby allowing the motor of the first drive module 830a to move the first and second displays 820a, 820b back and forth.

Additionally, the vehicle rear seat display device 800 can be used as a plurality of independent screens for respective occupants in the rear seat to use, or as a full screen to display a single connected image by moving the plurality of screens so as to get closer to each other.

To this end, the vehicle rear seat display device 800 can drive the motor of the second drive module 830b such that the first and second displays 820a, 820b move closer to or away from each other, based on a signal corresponding to another input applied to the input part 870 as shown in FIG. 4 being transmitted to the first and/or second processor 850a, 850b (or processor 850).

In this case, respective movable frames 840 (FIG. 2) on which the first and second displays 820a, 820b are arranged include separate drive motors because they move in a direction of getting closer to each other or in a direction of getting away from each other. Furthermore, motors matching respective movable frames 840 rotate in opposite directions, thereby allowing the plurality of movable frames 840 to gradually get closer to or away from each other.

Additionally, in an embodiment, the vehicle rear seat display device 800 can adjust the angle adjustment part 860 so as to allow the first and second displays 820a, 820b to form a predetermined angle with respect to the fixed frame 801 (FIG. 2) arranged on the ceiling of the vehicle 100. The angle adjustment part 860 can operate to tilt the first and second displays 820a, 820b by driving a motor so as to allow the plurality of movable frames 840 to form an angle with the fixed frame 801 that is horizontal, vertical, or in between.

For example, when the first and second displays 820a, 820b of the vehicle rear seat display device 800 are moved to the front of the front seat of the vehicle, it is transmitted to a front seat display and system through a router, and the angle adjustment part 860 can operate so as to allow the plurality of movable frames 840 to form a predetermined angle between the horizontal and vertical with the fixed frame 801.

Additionally, for example, before the first and second displays 820a, 820b of the vehicle rear seat display device 800 move to the front of the front seat or the front of the rear seat of the vehicle, the angle adjustment part 860 can be operated so as to allow the plurality of movable frames 840 to form a horizontal line with the fixed frame 801.

Meanwhile, although not shown in detail, when the front seat display is operated in a driving state of the vehicle, the processor 850 can limit the driving of the first drive module 830a so as not to allow the first and second displays 820a, 820b of the vehicle rear seat display device 800 to move toward the front of the front seat of the vehicle. Accordingly, driving safety is not compromised.

Similarly, when the front seat display is operated in a manual driving state of the vehicle, the processor 850 can limit the driving of the second drive module 830b so as not to allow the first and second displays 820a, 820b of the vehicle rear seat display device 800 to move in a direction of getting closer to each other. Accordingly, the first and second displays 820a, 820b do not obstruct a rearview mirror during manual driving by the driver.

As described above, the vehicle rear seat display device 800 according to an embodiment of the present disclosure provides more extended usability by driving the first and second displays 820a, 820b to move in different directions or form a predetermined angle in conjunction with the front seat display of the vehicle. Additionally, by restricting the movement of the first and second displays 820a, 820b according to the operation of the front seat display according to the driving state of the vehicle, the service can be provided in consideration of the driving safety of the vehicle.

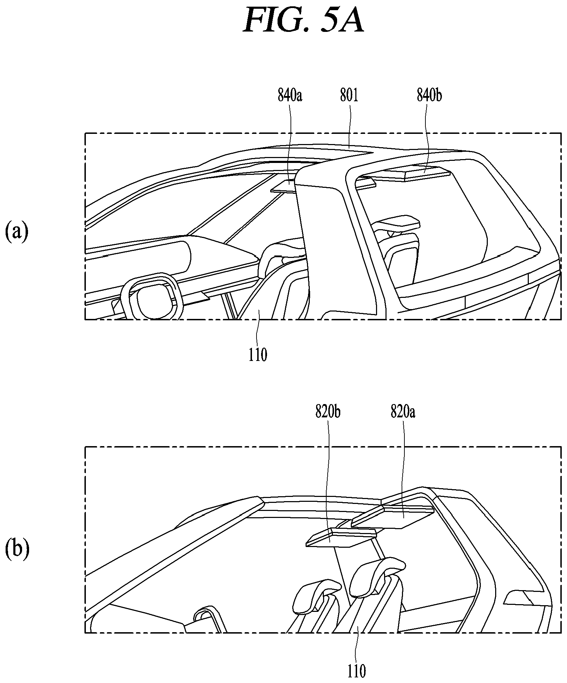

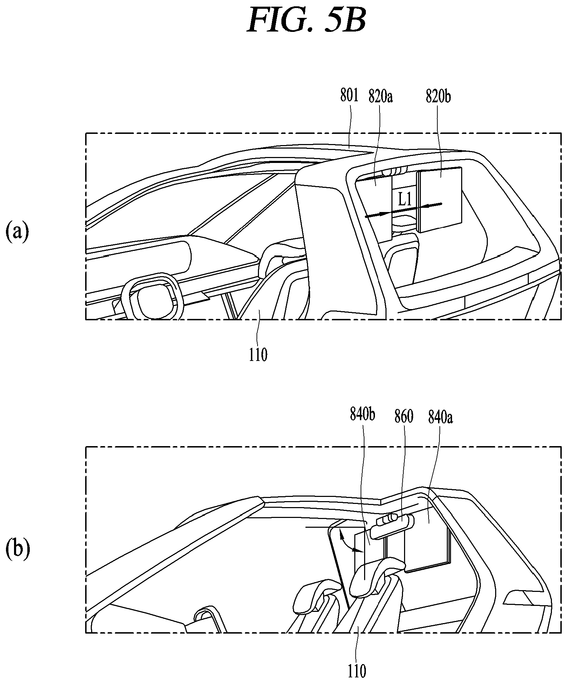

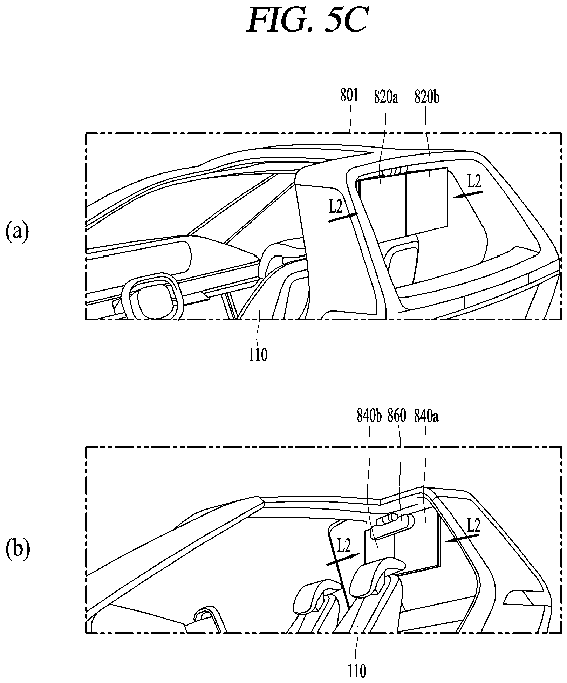

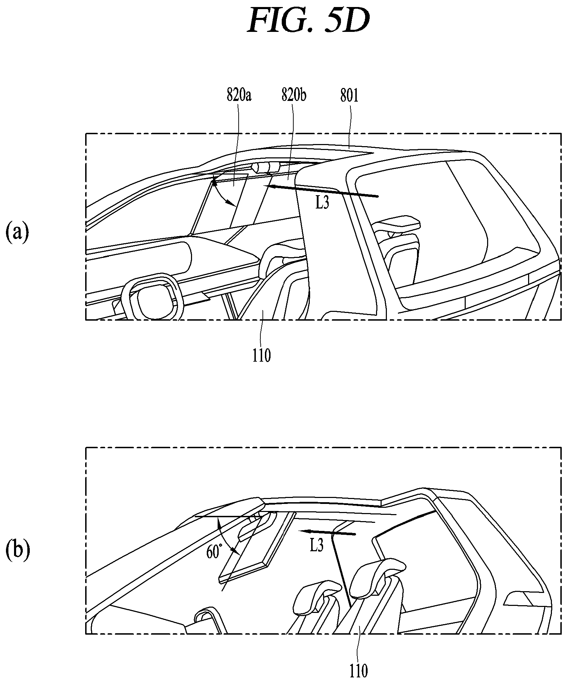

Hereinafter, FIGS. 5A, 5B, 5C and 5D are conceptual views for explaining that the vehicle rear seat display device 800 moves in different directions and adjusts its angle.

The vehicle rear seat display device 800 can be used as an integrated full screen or as a plurality of independent screens by moving in a direction of getting closer to or away from each other at a position corresponding to the rear seat of the vehicle.

Additionally, the vehicle rear seat display device 800 moves to a position corresponding to the front seat of the vehicle or moves back to a position corresponding to the rear seat, thereby providing extended usability such that not only an occupant in the rear seat but also an occupant in the front seat can use a plurality of screens.

Furthermore, when the rear seat display device 800 is not using the screen, or when it is used by the occupant in the front seat of the vehicle, it operates such that a plurality of screens form a predetermined angle, thereby efficiently using the vehicle space and providing comfortable audiovisual viewing to the occupant in the front seat.

FIG. 5A is an example drawing showing an initial state of the vehicle rear seat display device 800.

In an initial state of the vehicle rear seat display device 800, the first and second displays 820a, 820b are located at the rear of the vehicle front seat (or the front of the rear seat), and one side thereof is coupled to the fixed frame 801 of the ceiling (FIG. 2) to maintain a horizontal state. Accordingly, as shown in (a) of FIG. 5A, a plurality of movable frames 840a, 840b face the ceiling of the vehicle, and as shown in (b) of FIG. 5A, front surfaces of the first and second displays 820a, 820b faces the floor of the vehicle.

FIG. 5B is an example drawing showing a state in which occupants in the rear seat are respectively using the vehicle rear seat display device 800. That is, FIG. 5B is an example in which the first and second displays 820a, 820b of the vehicle rear seat display device 800 are used as a plurality of independent screens in the rear seat.

The first and second displays 820a, 820b are maintained apart by a predetermined separation distance L1 and are maintained in a vertical state with respect to the fixed frame 801 (FIG. 5B) of the ceiling (a).

In this case, the first display 820a is displayed for a left occupant in the rear seat, and the second display 820b is displayed for a right occupant in the rear seat. Additionally, only one of the first and second displays 820a, 820b can be activated while the other remains in a deactivated state. Additionally, the first and second displays 820a, 820b can be used as a plurality of independent screens, respectively, and can simultaneously display the same content screen. Additionally, in an embodiment, a screen displayed on one of the first and second displays 820a, 820b can be transmitted to the other.

Additionally, in FIG. 5B, the plurality of movable frames 840a, 840b are located on rear surfaces of the first and second displays 820a, 820b to face the front seat of the vehicle 100 (b). Additionally, the angle adjustment part 860 coupled to a portion of the plurality of movable frames 840a, 840b and a portion of the fixed frame 801 supports the plurality of movable frames 840a, 840b to maintain a horizontal state with respect to the fixed frame 801.

FIG. 5C is an example drawing showing a state in which a plurality of screens of the rear seat display device 800 are moved so as to get closer to each other to operate as a full screen.

Each of the plurality of movable frames 840a, 840b includes a motor, and each motor in conjunction therewith rotates in a different direction such that the first and second displays 820a, 820b move in a direction L2 of getting closer to each other based on a control signal of the processor 850 (a). When one side surfaces of the first and second displays 820a, 820b come into contact with each other, the operation of each motor in conjunction therewith is stopped. The processor 850 can control the screens such that the first and second displays 820a, 820b display a single image in full screen, or display an execution screen of the same application on the plurality of screens.

While the plurality of movable frames 840a, 840b move in a direction of getting closer to each other according to the operation of the second drive module 830b located on rear surfaces thereof, the fixed frame 801 on the ceiling, the angle adjustment part 860 connected thereto, and a fixed frame on a rear surface included in the second drive module 830b are formed to support the plurality of movable frames 840a, 840b (b).

Meanwhile, as shown in FIG. 5C, the movement of the first and second displays 820a, 820b so as to get closer to each other can be operated such that the first and second displays 820a, 820b move to the front of the vehicle front seat. In other words, while the plurality of movable frames 840 move back and forth along a length direction of the fixed frame 801 of the ceiling, the first and second displays 820a, 820b move together while maintaining contact with each other.

Next, FIG. 5D is an example drawing showing a state in which a plurality of screens of the rear seat display device 800 move toward the front seat so as to be used by an occupant in the front seat.

Referring to FIG. 5D, the first and second displays 820a, 820b move toward the front seat 110 along a length direction L3 of the fixed frame of the vehicle ceiling according to the driving of the first drive module 830a. In this case, front surfaces of the first and second displays 820a, 820b faces the floor and the plurality of movable frames are tilted to face the ceiling and move in a folded state while facing the fixed frame 801 of the ceiling (a).

When the movement is completed by reaching an end of the length direction L3 of the fixed frame 801, the first and second displays 820a, 820b are unfolded at an angle that can be viewed by an occupant of the front seat 110 and operate to form a predetermined angle with the fixed frame 801 of the ceiling (d).

Meanwhile, although not shown, a movement operation similar to the above can be performed even when the first and second displays 820a, 820b move from the front seat 110 toward the rear seat. Specifically, the first and second displays 820a, 820b tilted for the occupant of the front seat 110 are folded so as to form a horizontal line again with the fixed frame 801 of the ceiling, and then move toward the rear seat along the length direction L3 of the fixed frame 801. When the movement is completed by reaching the end of the length direction L3 of the fixed frame 801, it can be unfolded to maintain an initial state described with reference to FIG. 5A or to form a vertical line with the fixed frame 801 of the ceiling so as to be used by the occupant of the rear seat.

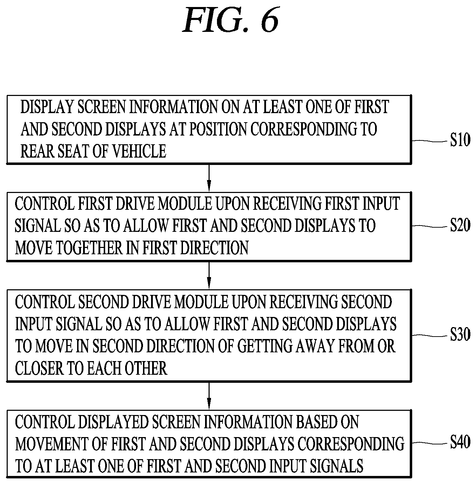

FIG. 6 is a representative flowchart for explaining a method of operating the vehicle rear seat display device 800 according to an embodiment of the present disclosure. Each operation shown in FIG. 6 can be performed by the control part 850 (or, processor 850) unless otherwise described. Additionally, in some embodiments, when the vehicle rear seat display device 800 is included as part of the vehicle system, it can be performed by the control part/processor of the vehicle system.

The rear seat display device 800 can be located in the rear of a front seat backrest of the vehicle in an initial state. The rear seat display device 800 includes a first display 820a and a second display 820b arranged on front surfaces of the plurality of movable frames 840, respectively, arranged side by side. In this case, one side of the plurality of movable frames 840 is coupled to one side of the fixed frame 801 (FIG. 2) of the ceiling of the vehicle 100 to be supported by the fixed frame 801 while using and moving first and second displays 820a, 820b located on front surfaces thereof.

In the initial state, the first and second displays 820a, 820b can be maintained in a folded state to form a horizontal line with the fixed frame 801 of the ceiling in an inactive state. Then, when there is a request for use of at least one of the first and second displays 820a, 820b by an occupant in the rear seat of the vehicle 100, the first and second displays 820a, 820b can be unfolded to form a vertical line with respect to the fixed frame 801.

In some embodiments, when the presence of an occupant in the rear seat of the vehicle is detected, it is determined that there is a request for use of at least one of the first and second displays 820a, 820b, and the first and second displays 820a, 820b can be unfolded to form a vertical line with respect to the fixed frame 801.

The angle adjustment part 860 of the vehicle rear seat display device 800 provides a driving force for an unfolding operation to the plurality of movable frames 840 so as to allow the plurality of movable frames 840 to form a vertical line with the fixed frame 801 of the ceiling in the aforementioned initial state. Accordingly, according to the unfolding operation of the plurality of movable frames 840, the first and second displays 820a, 820b arranged on front surfaces thereof are unfolded such that the plurality of screens face an occupant in the rear seat.

The control part 850 of the vehicle rear seat display device 800 performs screen control to display screen information on at least one of the first and second displays 820a, 820b at a position corresponding to the rear seat of the vehicle (S10).

When the unfolding of the first and second displays 820a, 820b is completed, at least one of the first and second displays 820a, 820b is now switched from an inactive state to an active state. In some embodiments, the vehicle rear seat display device 800 can be activated through an interaction such as a screen touch of the first and second displays 820a, 820b.

Next, the vehicle rear seat display device 800 controls the first drive module 830a in response to a first input signal so as to allow the first and second displays 820a, 820b to move together in a first direction (S20).

Here, the first input signal can include a control signal for the first and second displays 820a, 820b to move together from one of the front and rear seats to the other or a signal that triggers to generate such a control signal. The first input signal can be generated by touching a specific button forming the input part 870 or through a preset manipulation input.

Additionally, the first direction refers to a length direction of the fixed frame 801 of the ceiling connecting the front and rear seats of the vehicle. Specifically, the first direction includes both a direction of movement of the plurality of movable frames 840 from the rear seat to the front seat according to the driving of the first drive module 830a and a direction of movement of the plurality of movable frames 840 from the front seat to the rear seat according to the driving of the first drive module 830a.

The first drive unit 830a is arranged to be movable along a guide rail (not shown) arranged on the first fixed frame 801 of the ceiling together with the plurality of movable frames 840. Additionally, the first drive unit 830a can include a drive motor to provide a driving force for a movement in a first direction to the plurality of movable frames 840.

Meanwhile, in another embodiment, the operation of the first drive module 830a corresponding to the first input signal can be restricted according to the driving state of the vehicle. Specifically, the communication part 810 of the vehicle rear seat display device 800 receives information regarding a state and driving state of the vehicle from the vehicle 100, and transmits it to the control part 850. Then, the control part 850 determines whether to move the first and second displays 820a, 820b together in the first direction based on the received information.

For example, when the vehicle 100 is driving at a time point at which the first input signal is received, the control part 850 can restrict the operation of the first drive module 830a so as not to allow the first and second displays 820a, 820b to move in the first direction toward the front seat. That is, the first drive module 830a can be operated such that the first and second displays 820a, 820b move in the first direction toward the front seat only when the vehicle 100 is in a stopped state. Accordingly, a plurality of screens move to the front seat while the vehicle is driving and operate so as not to interfere with driving safety.

Additionally, when the vehicle rear seat display device 800 is located at a position corresponding to the front seat, even if the first input signal is not received, the first and second displays 820a, 820b can be operated such that the first and second displays 820a, 820b move in the first direction toward the rear seat, for example, based on the start of driving the vehicle 100 being recognized.

Additionally, for example, the control part 850 can drive the first drive module 830a for the first and second displays 820a, 820b to move in the first direction toward the rear seat regardless of the driving state of the vehicle. That is, the first and second displays 820a, 820b can be moved in the first direction toward the rear seat without restriction.

Independently of the above step (S20), the vehicle rear seat display device 800 can control the second drive module 830b in response to a second input signal so as to allow the first and second displays 820a, 820b to move in a second direction of getting away from or closer to each other (S30).

Here, the second input signal can include a control signal for moving the first and second displays 820a, 820b to get closer to or away from each other, or a signal that triggers to generate such a control signal. The second input signal can be generated by touching one of specific buttons forming the input part 870 (another button distinguished from the specific button for generating the aforementioned first input signal) or through a preset manipulation input.

Additionally, the second direction mentioned refers to a direction in which a distance between the plurality of movable frames of the vehicle gets away or closer together. Specifically, the second direction includes both a movement direction in which the plurality of movable frames 840 get closer to each other according to the driving of the second drive module 830b and a movement direction in which the plurality of movable frames 840 in contact get away from each other according to the driving of the second drive module 830b.

The second drive unit 830b is arranged such that the plurality of movable frames 840 can move left and right (left and right) respectively along a guide rail (not shown) formed on a support frame on rear surfaces thereof. In other words, the second drive unit 830b is connected to one side of the fixed frame 801 of the ceiling and arranged to respectively control the movable frames 840a, 840b arranged on rear surfaces of the first and second displays 820a, 820b so as to adjust a spacing between a plurality of screens. Additionally, the second drive unit 830b can include a drive motor to provide a driving force for a movement in a second direction to the plurality of movable frames 840.

In this way, the first and second displays 820a, 820b move independently in response to the first input signal and/or the second input signal, and then a plurality of screens are controlled based on each movement. That is, the rear seat display device 800 can control the displayed screen information based on the movement of the first and second displays 820a, 820b corresponding to at least one of the first and second input signals (S40).

Specifically, the vehicle rear seat display device 800 can operate to display different types of content based on the first and second displays 820a, 820b moving back and forth together according to the first input signal. For example, when the first and second displays 820a, 820b are moved to a position corresponding to the front seat, a content screen related to driving can be displayed first. Additionally, when the first and second displays 820a, 820b are moved to a position corresponding to the rear seat, an entertainment-related content screen can be displayed first. Additionally, the vehicle rear seat display device 800 can operate to display different types of content based on the first and second displays 820a, 820b moving left and right to get closer or away according to the second input signal.

Meanwhile, although not shown, the vehicle rear seat display device 800 according to an embodiment of the present disclosure can be operated such that the first and second displays 820a, 820b form a predetermined angle with respect to the fixed frame 801 (FIG. 2) of the vehicle ceiling before and/or after the movement of the first and second displays 820a, 820b.

To this end, the vehicle rear seat display device 800 further includes the angle adjustment part 860 that adjusts a degree of folding of the plurality of movable frames 840 so as to allow the first and second displays 820a, 820b to form a predetermined angle with respect to the ceiling. Specifically, the control part 850 can control the angle adjustment part 860 to adjust a degree of folding of the plurality of movable frames so as to allow the first and second displays 820a, 820b to form a predetermined angle between vertical and horizontal with respect to the ceiling of the vehicle in response to the first input signal.

In some embodiments, the control part 850 of the vehicle rear seat display device 800 can control the angle adjustment part to drive at least one time point before and after the plurality of movable frames 840 move in response to a first input signal.

Specifically, the control part 850 can adjust the angle adjustment part 860 such that, in response to a first input signal, the plurality of movable frames 840 are folded to form a horizontal line with respect to the ceiling, then move toward the front/rear seat while maintaining the folded state, and perform, when the movement is completed, unfolding so as to form a vertical line or a predetermined angle with respect to the ceiling.

To this end, the angle adjustment part 860 can include a drive motor for performing folding/unfolding of a plurality of movable frames. The angle adjustment part 860 can be arranged at a portion where the plurality of movable frames 840 are coupled to the fixed frame 801 of the ceiling, specifically at a connection portion joined to the support frame on rear surfaces of the plurality of movable frames 840 and the fixed frame 801 of the ceiling. The angle adjustment part 860 can move together with the plurality of movable frames 840 when the first and second displays 820a, 820b move according to the first input signal.

In an embodiment, the control part 850 of the vehicle rear seat display device 800 can control the driving of the angle adjustment part 860 such that the plurality of movable frames 840 are folded before moving the first and second displays 820a, 820b in a first direction in response to a first input signal, and the plurality of movable frames 840 are unfolded after moving in the first direction.

While the first and second displays 820a, 820b are moving in the first direction, the plurality of movable frames 840 can be maintained in a folded state. In this case, the first and second displays 820a, 820b can be maintained in an inactive state.

Additionally, when the movement of the first and second displays 820a, 820b in a first direction toward the front seat from the rear seat is completed, the plurality of movable frames 840 can be unfolded to have a predetermined angle (e.g., 60 to 45 degrees) between horizontal and vertical in consideration of a viewing angle of an occupant in the front seat. In this case, the predetermined angle refers to an angle formed between rear surfaces of the plurality of movable frames 840 and the ceiling (not an angle formed between front surfaces of the plurality of screens and the ceiling). Additionally, the predetermined angle can be a preset angle range in consideration of a viewing angle of the occupant in the front seat. When an angle adjustment for the first and second displays 820a, 820b is completed in this manner, the plurality of screens can be switched to an active state.

Additionally, when the movement of the first and second displays 820a, 820b in a first direction from the front seat toward the rear seat is completed, the plurality of movable frames 840 can be unfolded to form a vertical line with the ceiling.

Additionally, in some embodiments, the first and second displays 820a, 820b can be controlled to lean back as they move toward a first direction toward the front seat. Specifically, the control part 850 of the vehicle rear seat display device 800 can generate a control signal for adjusting a seat angle of the front seat 110 of the vehicle in response to a first input signal and provide it to a vehicle system when the first and second displays 820a, 820b move together in a first direction. Meanwhile, a control signal for adjusting the seat angle of the front seat 110 of the vehicle can be then generated and provided to the vehicle system so as to allow the seat of the front seat 110, which had been leaned back, to return to its previous state as the first and second displays 820a, 820b move again toward the rear seat in the first direction.

In another embodiment, the control part 850 of the vehicle rear seat display device 800 can receive information regarding a state and driving state of the vehicle through the communication part 810, and determine whether to drive the second drive module 830b in response to the second input signal based on the received information. Specifically, the control part 850 can determine whether the first and second displays 820a, 820b move in a second direction to get closer to each other in response to a second input signal based on the received state/driving state information of the vehicle. This is because when the first and second displays 820a, 820b are moved so as to get close to each other while forming a vertical line with the ceiling, they obstruct a view of the rearview mirror in the driver's seat, making it difficult to see the vehicle behind. On the other hand, when the first and second displays 820a, 820b move in a second direction away from each other, it can be executed without limitation.

As described above, the vehicle rear seat display device 800 according to an embodiment of the present disclosure is implemented to move in different directions, thereby allowing a rear seat occupant in the vehicle to use a plurality of screens independently or in a full screen view as well as allowing a front seat occupant in the vehicle to receive a content service through the plurality of screens.

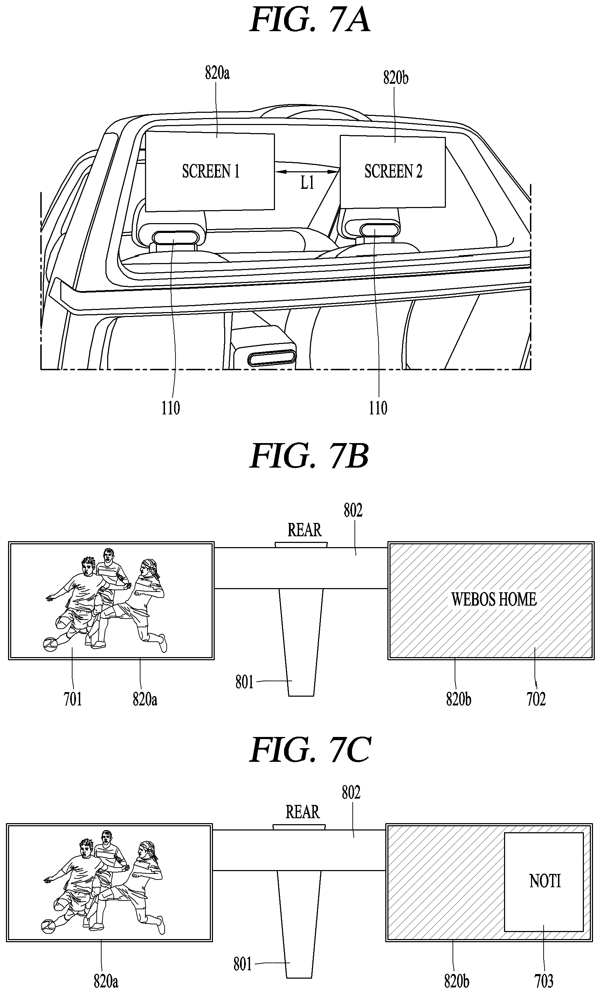

FIGS. 7A, 7B, and 7C are drawings showing examples of operation methods when the first and second displays 820a, 820b are used as independent screens.

In an initial state, the first and second displays 820a, 820b can be in a horizontal state with respect to the ceiling of the vehicle together with the plurality of movable frames 840. In this state, when there is a need of a rear seat occupant to use at least one of the first and second displays 820a, 820b or when a second input signal is received, the plurality of movable frames 840 can be angle-adjusted to form a vertical line with the ceiling. Then, at least one screen of the first and second displays 820a, 820b can be activated.

Referring to FIG. 7A, the first and second displays 820a, 820b are arranged side by side at the rear of the front seat 110 with a predetermined separation distance L1. While the first and second displays 820a, 820b are separated by a separation distance L1, each can be used as an independent screen. Accordingly, a first screen (screen 1) can be displayed on the first display 820a, and a second screen (screen 2) different from the first screen can be displayed on the second display 820b.

Only one of the first and second displays 820a, 820b can be in an active state, and the other that is not in use can maintain an inactive state.

Referring to FIG. 7B, for example, when only a rear (left) occupant wants to receive a content service, the first display 820a can maintain an active state and the second display 820b can be in an inactive state. In this case, a support frame 802 that supports a plurality of fixed frames is arranged on rear surfaces of the first and second displays 820a, 820b spaced apart from each other. Additionally, one side of the support frame 802 is coupled to the fixed frame 801 of the vehicle ceiling.

In FIG. 7B, while a first screen 701 is being displayed on the activated first display 820a, when there is a request for use of the second display 820b, the second display 820b can also be switched to an active state to display a second screen 702. In this case, the second screen 702 can be any type of content screen regardless of the first screen 701.

FIG. 7C is an example drawing showing a case where screen transmission occurs from the activated first display 820a to the second display 820b in an inactive state. For example, while viewing the first screen 701 through the first display 820a, when a need arises to transmit the same screen to a (right) occupant in the rear seat, visual information 703 for accepting screen transmission can be displayed on a portion of the second display 820b. In this case, based on a response to the visual information 703, the second display 820b can be switched to an active state and the same screen as the first display 820a can be displayed together on the second display 820b.

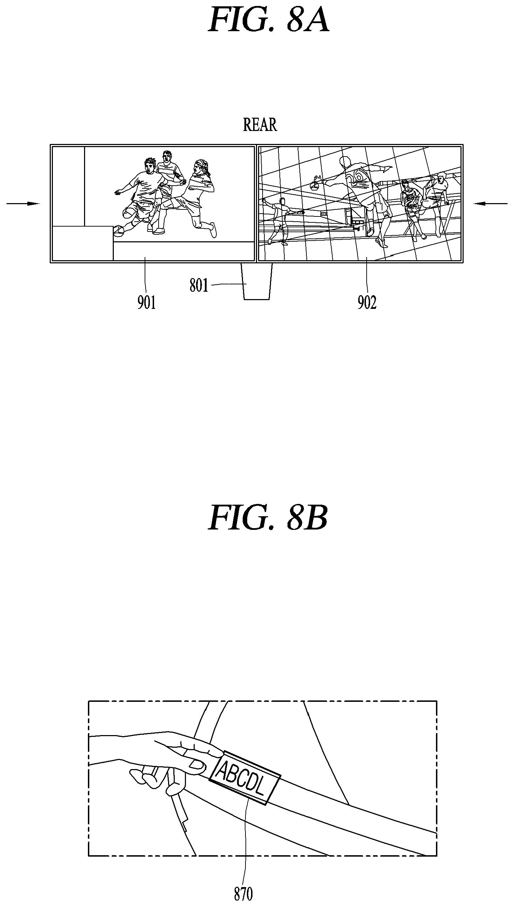

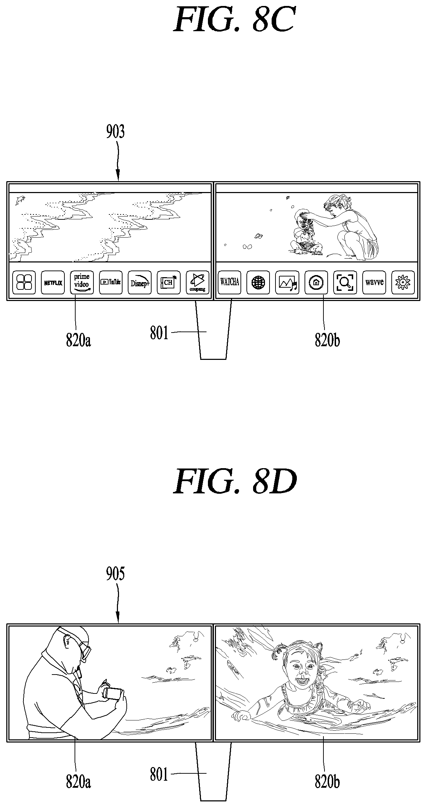

Next, FIGS. 8A, 8B, 8C, and 8D are example drawings for explaining a method of moving the first and second displays 820a, 820b so as to get closer to each other, and a screen control method thereof.

Upon receiving a second input signal while the first and second displays 820a, 820b are spaced apart by a predetermined separation distance, they can move left and right to get closer to each other until respective one side surfaces of the first and second displays 820a, 820b come into contact with each other.

For example, referring to FIG. 8B, the input part 870 (FIG. 2) for receiving an input to control the movement of the first and second displays 820a, 820b of the vehicle rear seat display device 800 can be arranged at a position spaced apart from the first and second displays 820a, 820b inside the vehicle 100. The input part 870 can be arranged, for example, in consideration of a distance and height at which it can be manipulated without changing an arm length, seat position, and posture of the occupants in the rear and front seats of the vehicle. In some embodiments, the input part 870 can be implemented by being arranged in the front and rear seats, respectively, or by being included in a menu item of the touchscreen.

For example, as shown in FIG. 8B, the input part 870 can be implemented by including a plurality of buttons (e.g., "A, B, C, D, E") that move the first and second displays 820a, 820b in different directions or generate each input signal for screen control.

For example, button 'A' can generate an input signal to operate in an initial state of the first and second displays 820a, 820b described above, and button 'B' can generate an input signal for vertical tilting movement for screen use in the rear seat. Additionally, button 'C' can generate a second input signal for moving a plurality of screens to get closer to or away from each other, and button 'D' can generate an input signal for screen control using the plurality of screens in a full screen view. Furthermore, button 'E' can generate a first input signal including a movement to the front seat (rear seat) and a tilting movement of the plurality of screens.

The first and second displays 820a, 820b can be operated to move in a second direction of getting closer to each other based on a second input signal. To this end, the control part 850 can perform screen control such that the first and second displays 820a, 820b operate in a full screen view based on the first and second displays 820a, 820b moving in a second direction to get closer to each other in response to the received second input signal while at least one of the first and second displays 820a, 820b is activated.

Meanwhile, when the first and second displays 820a, 820b are moved closer to each other to come into contact with each other, for example, independent control can be driven to display a screen of the same application while maintaining independent control. For example, referring to FIG. 8A and 8B, when an input is applied to the aforementioned button 'C' from the input part 870, the plurality of screens can be displayed as a match screen mode. Specifically, execution screens of the same game application can be displayed on the first and second displays 820a, 820b, respectively. Each screen is displayed according to a field of view of the matching occupant, and each occupant can control the screen independently. For example, a first player's game screen 901 can be displayed on the first display 820a, and a second player's game screen 902 for the same game can be displayed on the second display 820b.

Subsequently, while the first and second displays 820a, 820b are in contact with each other, the entire plurality of screens can operate in a full screen view displaying a single image. For example, referring to FIGS. 8B and 8C, when an input is applied to the aforementioned button 'D' from the input part 870, the plurality of screens can be switched to a full screen view displaying a single image. Accordingly, as shown in FIG. 8C, a single image 903 is connected to and displayed on the first and second displays 820a, 820b. In this case, due to a right bezel of the first display 820a and a left bezel of the second display 820b, a partial frame within the single image 903 can be covered or duplicated.

FIG. 8D shows that the first and second displays 820a, 820b operate in a full screen view by resolving screen covering/disconnection due to the bezel. To this end, a bezel portions in contact between the first and second displays 820a, 820b is configured in the form of an LED bar, and screen control can be performed to obstruct an image output on the bezel with the same video frame. Accordingly, the first and second displays 820a, 820b can be operated such that a single image 904 is displayed without a seam even while operating in a full screen view.

Meanwhile, when a request to operate in a full screen view is received while the first and second displays 820a, 820b operate independently to display different screens, the control part 850 can be implemented to output an image output to one of the displays in a full screen view across the entire first and second displays 820a, 820b according to a preset criterion.

Here, the preset criterion can be determined based on at least one of a display with a full-screen request, a priority of displayed content, a priority of control rights per seat, a default setting state, and a user setting. For example, when it is determined to select based on the priority of displayed content, one of screen information can be selectively displayed in a full screen view according to a content type and execution state corresponding to first screen information and second screen information displayed on the first and second displays 820a, 820b, respectively. For example, when the first screen information displayed on the first display 820a is a movie screen and the second screen information displayed on the second display 820b is a menu screen, the movie screen on the first display 820a can be selected as a full-screen image.

Meanwhile, although not shown, the control part 850 can perform screen control such that each of the first and second displays 820a, 820b operates as an independent screen again based on the first and second displays 820a, 820b moving away from each other in response to the received second input signal while the first and second displays 820a, 820b are operating in a full screen view in contact with each other.

For example, the control part 850 can operate to display previous screen information that has been displayed on each of the plurality of screens again, or to return to a previous state (e.g., inactive state). Alternatively, for example, depending on a full-screen content type (e.g., game content) and execution state (e.g., match mode in game content), screen control can be performed such that a screen that has been displayed as a single image is displayed identically on two screens.

Additionally, in an embodiment, the control part 850 can perform screen control such that the other display is switched to an active state based on the first and second displays 820a, 820b moving in a second direction of getting closer to each other in response to the received second input signal while only one of the first and second displays 820a, 820b is activated, and the other display is switched back to an inactive state based on the first and second displays 820a, 820b moving in a second direction of getting away from each other in response to a subsequent second input signal.

As such, the vehicle rear seat display device 800 according to an embodiment of the present disclosure can perform a movement operation in which a plurality of screens get closer to or away from each other, and provide a display mode service that meets the needs of the rear seat occupant by controlling the content or screen state displayed accordingly to adaptively change.

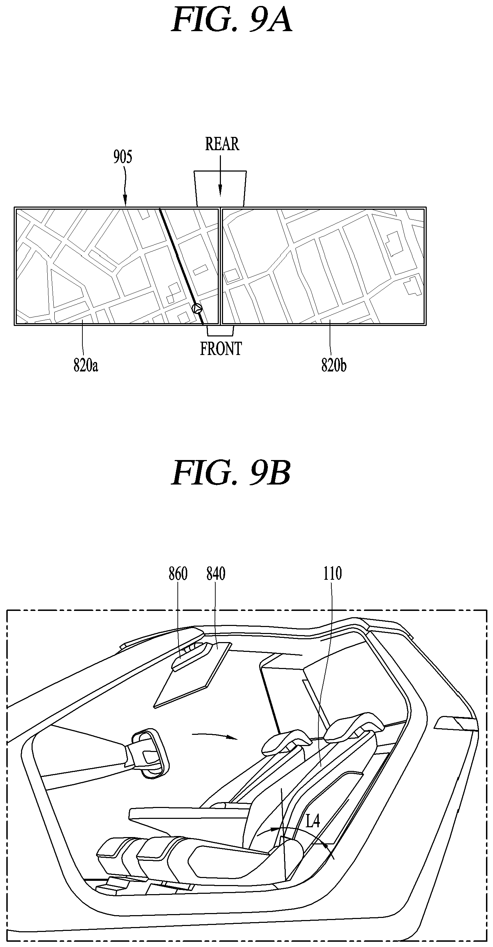

Subsequently, FIGS. 9A and 9B are example drawings for explaining a method of moving the first and second displays 820a, 820b to a position corresponding to a front seat of a vehicle, a screen control method and an operation of a vehicle system thereof.

The control part 850 of the vehicle rear seat display device 800 can adjust a degree of folding of the plurality of movable frames 840 so as to allow the first and second displays 820a, 820b to form a predetermined angle between vertical and horizontal with respect to the ceiling in response to a first input signal.

Specifically, the control part 850 recognizes a current position of the first and second displays 820a, 820b based on the received first input signal, and determines whether to move the plurality of movable frames 840 toward the front seat or toward the rear seat according to the received first input signal. Furthermore, when the first and second displays 820a, 820b are not horizontally formed with the fixed frame 801 of the ceiling, a folding operation is performed such that the plurality of movable frames 840 are horizontally formed with the fixed frame 801. Then, the driving of the first drive module 830a is controlled such that the plurality of movable frames 840 in a folded state according to the determined direction move along a length direction of the fixed frame 801 of the ceiling. A driving force is transmitted to the plurality of movable frames 840 according to the driving of the motor included in the first drive module 830a, and the plurality of movable frames 840 are moved in a first direction. When the movement of the plurality of movable frames 840 is completed, an unfolding operation is performed such that the plurality of movable frames 840 form a vertical line with the fixed frame 801 or rear surfaces of the plurality of movable frames 840 form a predetermined angle (e.g., 60 degrees) with respect to the ceiling.

Meanwhile, the control part 850 of the vehicle rear seat display device 800 can display a first type of screen while the first and second displays 820a, 820b are in a position corresponding to the rear seat of the vehicle, and control the first type of screen to change to a second type of screen related to driving the vehicle based on the first and second displays 820a, 820b moving to a position corresponding to the front seat of the vehicle according to the driving of the first drive module 830a. Here, the first type of screen can be any type of content selected by the occupant in the rear seat. Additionally, the second type of screen can include, for example, a navigation screen of the vehicle.

FIG. 9A is an example showing that screens displayed on the first and second displays 820a, 820b are different after moving the plurality of movable frames 840 from the rear seat toward the front seat. For example, as shown in FIG. 8D, when a movie screen 904 is displayed in a full screen view on the first and second displays 820a, 820b in the rear seat and then moved toward the front seat, a driving screen 905 of the vehicle can be displayed in a full screen view.

Meanwhile, when the first and second displays 820a, 820b move toward the front seat or after the movement is completed, the vehicle rear seat display device 800 can communicate with the vehicle system so as to allow a control signal to be transmitted from the vehicle rear seat display device 800 to the vehicle system such that a seat backrest of the front seat leans back.

Referring to FIG. 9B, when the first and second displays 820a, 820b move to a position corresponding to the front seat according to the first input signal, an unfolding operation of the plurality of frames 840 is performed by the angle adjustment part 860. According to the unfolding operation, the plurality of frames 840 are rotated so as to be bent backward toward a windshield of the vehicle, and the rear surfaces of the plurality of frames 840 and the ceiling of the vehicle are adjusted to form a predetermined angle, for example, about 60 degrees. In this way, the first and second displays 820a, 820b move toward the front seat, and when they pass the midpoint or after the movement is completed, a seat backrest of the front seat 110 is leaned back by the vehicle system to form a predetermined angle L4. Here, the predetermined angle L4 can be, for example, in a range between 20 and 30 degrees, and this value can vary depending on a current angle of the seat backrest and a sensing value of the sensor (e.g., weight sensor) mounted on the seat. Additionally, when the front seat 110 is already tilted backward, a leanback operation can be omitted.

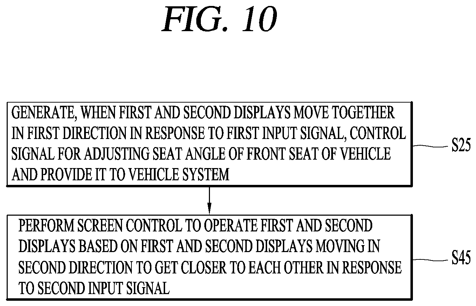

FIG. 10 is a flowchart for explaining screen control and an operation process of a vehicle system when the first and second displays 820a, 820b move to a position corresponding to a front seat of a vehicle. All or some of the operations shown in FIG. 10 can be performed in combination with the operations of the flowchart in FIG. 6. Additionally, unless otherwise described, the operation of FIG. 10 is assumed to be performed by the control part 850 (or processor 850) of the vehicle rear seat display device 800.

Referring to FIG. 10, the vehicle rear seat display device 800 can generate, when the first and second displays 820a, 820b move together in a first direction in response to a first input signal, a control signal for adjusting a seat angle of the front seat of the vehicle and provide it to a vehicle system (S25).

Specifically, the control part 850 can provide, when the first and second displays 820a, 820b move toward the front seat of the vehicle, a first control signal for adjusting the seat of the front seat 110 to be tilted backward to the vehicle system. The vehicle system can control a backrest seat of the front seat 110 of the vehicle to lean back by about 20 to 30 degrees from the vertical based on the first control signal.

Similarly, when the first and second displays 820a, 820b move toward the rear seat of the vehicle, the control part 850 can provide a second control signal for adjusting the seat of the front seat 110 to be pulled forward to return to its previous state. The vehicle system can operate the backrest seat of the front seat 110 of the vehicle to return to a vertical state or an initial setting state from a lean-back state based on the second control signal.

Meanwhile, although not described in detail, when the first and second displays 820a, 820b move toward the rear seat of the vehicle, the rear seat of the vehicle can be adjusted to be tilted backward. In this case, when the first and second displays 820a, 820b are moved toward the front seat of the vehicle or folded to form a horizontal line with the fixed frame 801 of the ceiling, the leaned-back rear seat backrest seat can be returned to its original state.

Independently of the above step (S25), the vehicle rear seat display device 800 can operate to automatically change a display mode of the first and second displays 820a, 820b based on the first and second displays 820a, 820b moving in a second direction to get closer to or away from each other in response to a second input signal (S45).

Specifically, based on the first and second displays 820a, 820b moving in a second direction to get closer to each other, the control part 850 can perform screen control so as to allow the first and second displays 820a, 820b to operate in a match mode or a full screen mode.

For example, when the first and second displays 820a, 820b are moved to get close to each other and one side surfaces thereof come into contact with each other while a game application is running on either of the first and second displays 820a, 820b, the screens of the first and second displays 820a, 820b, respectively, can be switched to a game match mode screen. Alternatively, when the first and second displays 820a, 820b are moved to get close to each other and one side surfaces thereof comes into contact with each other while a movie screen is displayed on either of the first and second displays 820a, 820b, the movie screen can be displayed in a full screen view on the first and second displays 820a, 820b.

As described above, according to a vehicle rear seat display device in accordance with an embodiment of the present disclosure and a method of operating the same, as a plurality of screens located in a rear seat of a vehicle move in a direction of getting closer to or further away from each other, a display mode of the screen can be changed, thereby allowing them to be used as independent screens or multi-screens depending on the needs of a rear seat occupant. Accordingly, a user experience utilizing a plurality of screens is further expanded. In addition, a plurality of screens located in a rear seat of a vehicle can be implemented to be movable toward a front seat or back toward a rear seat, thereby allowing the rear seat screens to also be used by an occupant in the front seat when necessary. Accordingly, a limited number of displays can be shared by more occupants, thereby expanding the user experience and allowing an interior design of a vehicle to be kept simple. Furthermore, a plurality of screens are automatically changed to a display mode that matches the viewing intention of the vehicle occupant due to movement, and furthermore, the operation of leaning back the seat is performed in parallel, thereby enabling more comfortable viewing of content inside the car. Additionally, in consideration of the driving safety of the vehicle, it is implemented to restrict a movement of the plurality of screens to the front seat during the driving of the vehicle, and to restrict a coupling of multi-screens in the rear seat during manual driving, thereby simultaneously satisfying the needs and driving safety of the occupants.

The foregoing present disclosure can be implemented as codes readable by a computer on a medium written by the program. The computer-readable media includes any type of recording apparatus in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage apparatus and the like, and also include an apparatus implemented in the form of a carrier wave (e.g., transmission over the Internet). In addition, the computer can also include a controller/processor of the vehicle display device 800. Therefore, the detailed description should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

## Claims

1. A vehicle rear seat display device, the device comprising:
a first display and a second display respectively arranged on a plurality of movable frames arranged side by side;
a first drive module that drives the first and second displays to move in a first direction, and a second drive module that drives the first and second displays to move in a second direction different from the first direction; and
a control part that controls the driving of the first and second drive modules and screens of the first and second displays,
wherein the control part controls the first drive module such that the first and second displays move together in the first direction in response to a first input signal, and controls the second drive module such that the first and second displays move in the second direction so as to get away from or closer to each other in response to a second input signal different from the first input signal.

2. The device of claim 1, further comprising:
an angle adjustment part that adjusts a degree of folding of the plurality of movable frames so as to allow the first and second displays to form a predetermined angle with respect to the ceiling,
wherein the control part adjusts the degree of folding of the plurality of movable frames in response to the first input signal so as to allow the first and second displays to form a predetermined angle between vertical and horizontal with respect to the ceiling.

3. The device of claim 2, wherein the control part controls the angle adjustment part to be driven at at least one time point before and after the plurality of movable frames move in response to the first input signal.

4. The device of claim 3, wherein the control part controls the driving of the angle adjustment part such that the plurality of movable frames are folded before moving the first and second displays in the first direction in response to the first input signal, and the plurality of movable frames are unfolded after moving in the first direction.

5. The device of claim 4, wherein the control part maintains a plurality of screens in an inactive state while the first and second displays move in the first direction in response to the first input signal, and controls the driving of the angle adjustment part such that the plurality of movable frames are unfolded in a first angle range based on the completion of movement of the first and second displays to a position corresponding to a front seat.

6. The device of claim 1, wherein the control part generates, when the first and second displays move together in the first direction in response to the first input signal, a control signal for adjusting an angle of a seat located in a front seat of a vehicle and provides it to a vehicle system.

7. The device of claim 1, further comprising:
a communication part that receives state information of a vehicle,
wherein the control part determines whether to move the first and second displays in the first direction in response to the first input signal based on the received state information of the vehicle.

8. The device of claim 1, wherein the control part displays a first type of screen while the first and second displays are at a position corresponding to a rear seat of the vehicle, and controls the first type of screen to change to a second type of screen related to the driving of the vehicle based on the first and second displays moving to a position corresponding to the front seat of the vehicle according to the driving of the first drive module.

9. The device of claim 1, wherein while at least one of the first and second displays is in an active state,
the control part performs screen control so as to allow the first and second displays to operate in a full screen view based on the first and second displays moving in the second direction to get closer to each other in response to the second input signal.

10. The device of claim 9, wherein while first screen information is displayed on the first display and second screen information is displayed on the second display,
the control part displays one of the first and second screen information in a full screen view on the first and second displays based on a preset condition on the basis of the first and second displays moving in the second direction to get closer to each other in response to the second input signal.

11. The device of claim 10, wherein while the first and second displays are operating in a full screen view,
the control part performs screen control so as to allow the first and second displays to operate as independent screens based on the first and second displays moving in the second direction to get away from each other in response to the second input signal.

12. The device of claim 9, wherein while only one of the first and second displays is in an active state,
the control part controls the other display to be switched to an active state based on the first and second displays moving in the second direction so as to get closer to each other in response to the second input signal, and controls the other display to be switched to an inactive state based on the first and second displays moving in the second direction so as to get away from each other in response to a subsequent second input signal.

13. The device of claim 1, further comprising:
a communication part that receives state information of a vehicle,
wherein the control part determines whether to move in the second direction in which the first and second displays get closer to each other in response to the second input signal, based on the received state information of the vehicle.

14. A method of operating a vehicle rear seat display device comprising a first display and a second display respectively arranged on a plurality of movable frames arranged side by side, the method comprising:
displaying screen information on at least one of the first and second displays at a position corresponding to a rear seat of the vehicle;
controlling a first drive module so as to allow the first and second displays to move together in a first direction in response to the reception of a first input signal;
controlling a second drive module so as to allow the first and second displays to move in a second direction of getting away from or closer to each other, in response to the reception of a second input signal different from the first input signal; and
controlling the displayed screen information based on the movement of the first and second displays corresponding to at least one of the first and second input signals.

15. The method of claim 14, wherein the controlling of the first drive module further comprises:
adjusting a degree of folding of the plurality of movable frames in response to the first input signal so as to allow the first and second displays to form a predetermined angle between vertical and horizontal with respect to the ceiling.

16. The method of claim 14, wherein the controlling of the first drive module further comprises:
generating, when the first and second displays move together in the first direction, a control signal for adjusting a seat angle of a front seat of the vehicle and providing it to a vehicle system.

17. The method of claim 14, wherein the controlling of the displayed screen information comprises:
controlling screen information so as to allow the first and second displays to operate in a full screen view based on the first and second displays moving in the second direction to get closer to each other in response to the second input signal.
